(19) Europäisches Patentamt
European Patent Office
Office européen des brevets

(11) **EP 1 958 982 B1**

(12) **EUROPEAN PATENT SPECIFICATION**

(45) Date of publication and mention of the grant of the patent:
**11.04.2012 Bulletin 2012/15**

(51) Int Cl.:
***C08J 7/04*** (2006.01)

(21) Application number: **08151560.3**

(22) Date of filing: **18.02.2008**

(54) **Method for forming multi-layer film for plastic material and its coated product**

Verfahren zur Erzeugung einer mehrschichtigen Folie für ein Kunststoffmaterial und damit beschichtetes Produkt

Procédé pour la formation d'un film multicouche pour un matériau plastique et son produit revêtu

(84) Designated Contracting States:
**DE FR GB**

(30) Priority: **19.02.2007 JP 2007038410**

(43) Date of publication of application:
**20.08.2008 Bulletin 2008/34**

(73) Proprietors:
- **Nippon Bee Chemical Co., Ltd.**
  **Osaka 573-1153 (JP)**
- **Toyota Jidosha Kabushiki Kaisha**
  **Aichi-ken, 471-8571 (JP)**

(72) Inventors:
- **Sudo, Takahisa**
  **Toyota-shi Aichi 471-8571 (JP)**
- **Takata, Shinya**
  **Shodai-Ohtani**
  **Hirakata-shi Osaka 573-1153 (JP)**
- **Ono, Koichi**
  **Shodai-Ohtani**
  **Hirakata-shi Osaka 573-1153 (JP)**
- **Saito, Yoshihiko**
  **Shodai-Ohtani**
  **Hirakata-shi Osaka 573-1153 (JP)**

(74) Representative: **Henkel, Breuer & Partner**
**Patentanwälte**
**Maximiliansplatz 21**
**80333 München (DE)**

(56) References cited:
**EP-A1- 0 899 314        GB-A- 2 171 030**
**US-A1- 2002 090 461**

- **DATABASE WPI Week 200423 Thomson Scientific, London, GB; AN 2004-241827 XP002601481 & JP 2002 248422 A (NIPPON PAINT CO LTD) 3 September 2002 (2002-09-03)**
- **DATABASE WPI Week 199001 Thomson Scientific, London, GB; AN 1990-004639 XP002601482 & JP 1 288372 A (KANSAI PAINT CO LTD) 20 November 1989 (1989-11-20)**
- **DATABASE WPI Week 200239 Thomson Scientific, London, GB; AN 2002-356347 XP002601483 & JP 2002 038096 A (NIPPON PAINT CO LTD) 6 February 2002 (2002-02-06)**
- **DATABASE WPI Week 200239 Thomson Scientific, London, GB; AN 2002-356353 XP002601484 & JP 2002 038104 A (NIPPON PAINT CO LTD) 6 February 2002 (2002-02-06)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

A. TECHNICAL FIELD

The present invention relates to a method of coating a plastic material and its coated product. In detail, the present invention relates to a method of forming a multi-layer film on the surface of the plastic material for an automobile and its coated product.

B. BACKGROUND ART

In recent years, a three wet-on-wet coat has been investigated with the aim of shortening a coating process and energy saving. The three wet-on-wet coat is a coating method in which a three-layer coating film made of three types of coatings is formed by sequentially applying each coating without individually baking and curing and then the three-layer coating film is baked and cured simultaneously. For example, in Japanese Patent Application Laid-Open (JP-A) No. 10-296171, a three wet-on-wet coat using a water-based primer coating, a coloring coating, and a clear coating is proposed.

However, in the case of giving a final glazing coat to a plastic material used in a bumper, a lacing etc. for an automobile with a base coating, a clear coating, etc., shortening of the coating process and energy saving cannot be realized completely even if the technique described in JP-A No. 10-296171 is used because a different coating is used in the above-described final glazing coating used for a plastic material for an automobile (hereinafter, referred to simply as "a plastic material" sometimes) from the coating used for a metal material for an automobile (hereinafter, referred to simply as "a metal material" sometimes), and there are problems described as follows.

That is, because different coatings are used in the coating for a metal material and the coating for a plastic material as described above in the coating for an automobile, they are manufactured separately, and also because the coatings are performed in separate lines in the coating processes of the metal material and the plastic material, the coating color of each material may differ from each other. Therefore, there is a problem that a lot of time and labor are needed for color adjustment of the metal material and plastic material in the case of manufacturing an automobile by combining these in the end.

The reason that a different coating is used for a metal material and for a plastic material is that a coating which thermally cures at a relatively high temperature is used for the metal material in order to secure sufficient curability because the metal material is superior in heat resistance. On the other hand, the reason is that a coating which can exhibit a film performance required for a material at baking and curing in a temperature range in which thermal deformation does not occur is used for the plastic material because the plastic material is sensitive to heat.

Hence, development has been attempted on a technique in which sufficient curing can occur at a low temperature to the extent that the plastic material cannot be deformed even if it is the coating that has been conventionally used for a metal material. For example, JP-A No. 61-161179 discloses a coating film forming method of a 2-coat-1-bake system in which the curing occurs at room temperature or at a temperature of about 100°C or less. Specifically, the technique in JP-A No. 61-161179 is a technique in which a coating having a hydroxyl group-containing resin and a polyisocyanate compound as main components is used as a top coating, the hydroxy group-containing resin is used as a resin component of a base coating, the hydroxyl group-containing resin and the polyisocyanate compound react to be cured in a top coating layer, and the hydroxyl group contained in a base coating layer and the polyisocyanate compound penetrating from the top coating layer react to be cure in the base coating layer.

However, the technique in JP-A No. 61-161179 is a technique that can only apply in the case that the base coating is a solvent-type coating (referred to as "organic liquid type coating" in the JP-A No. 61-161179), and because sufficient curing cannot be performed in the case of a water-based base coating having a high water absorption, there is a problem that water resistance becomes inferior. Further, when a large amount of moisture exists in a base layer, the polyisocyanate compound penetrating from a clear layer reacts with the above-described moisture, and the curing of the base coating becomes increasingly insufficient.

US20020090461 discloses a method for coating a plastic material for an automobile comprising the steps of forming a three-layer coating film by sequentially coating the surface with a water-based primer coating, a water-based metallic coating and an high solid clear coating and baking the formed three-layer coating film simultaneously at a temperature of 100 to 180°C. After application of the two first layers, a pre-drying my be conducted.

GB 2 171 030 discloses a method for coating a plastic material for an automobile comprising the steps of forming a two-layer coating film by sequentially coating the surface with a water-based or solvent-based colouring and/or metallic coating and an clear coating containing hydroxyl group containing resin and polyisocyanate and a solvent and baking the formed two-layer coating film simultaneously at a temperature of between room temperature and 140°C.

In recent years, a technique to solve the above-described problems that is applicable to the water-based base coating is needed because shifting from the solvent-type coating to the water-based coating is demanded considering environmental safeguards.

Thus, the present inventors repeated various experiments in order to solve the above-described problems and have found as follows. When a high solid clear coating having a high content of non-volatile components is used as a clear coating, the main component of the high solid clear coating is made to be a hydroxyl group-containing resin and a polyisocyanate compound, various ideas are performed on their composition components, and the non-volatile components of a two-layer coating film made of a primer coating and a base coating are adjusted before coating with a high solid clear coating, the transition amount of the polyisocyanate compound from a high solid clear layer to a base layer is increased. Further, sufficient water resistance can be given to the multi-layer film, and curability of the base material can be raised while maintaining the film performance needed for the clear layer such as solvent resistance and weathering resistance. As a result, baking and curing at a lower temperature than a conventional temperature can be realized and a water-based base coating used for a metal material for an automobile can be used for a plastic material for an automobile as it is.

However, in the case of using a water-based metallic base coating in the above-described method of coating a plastic material for an automobile, the above-described effects can not be obtained stably at all times, and it has been found that the curing reaction of the base layer does not proceed sufficiently at the baking and curing and there are cases where poor adhesion, a poor appearance, and the like occur at a water resistance test, etc.

## SUMMARY OF THE INVENTION

### A. OBJECT OF THE INVENTION

An object of the present invention is to provide a method of coating a plastic material for an automobile in which a transition amount of a polyisocyanate compound from a clear layer to a base layer is larger than a conventional one and that is capable of increasing curability of a base coating while keeping film performance demanded for the clear layer without decreasing water resistance, solvent resistance, and appearance even when a water-based metallic base coating is used.

### B. DISCLOSURE OF THE INVENTION

The present inventors repeated further investigation in order to solve the above-described problems. In the process, causes for coating film performance becoming unstable are attempted to be discovered. As a result, it has been found that the above-described problems depend on characteristics of the solvent used in the clear coating. This is considered to be due to the following reasons. That is, first, because metallic pigments are contained in the water-based metallic base coating and the metallic pigments are closely aligned, the polyisocyanate compound is prevented from penetrating from the clear layer to the base layer, and a curing reaction in the base layer is hindered. However, depending on the types and amount of the solvent used, penetration of the polyisocyanate is promoted by penetrating the polyisocyanate compound together simultaneously when the solvent penetrates from the clear layer to the base layer or by plasticization of the base layer due to penetration of the solvent to the base layer to result in disorder of the closely aligned orientation of the metallic pigments. As a result, there is a case that the curing reaction in the base layer is promoted. Then, even in the case that the orientation of the above-described metallic pigments is disturbed, when volumetric shrinkage occurs during volatilizing the solvent after the penetration of the polyisocyanate compound, the metallic pigments align again regularly and there is no sign that the appearance becomes poor.

Hence, the present inventors have attempted various experiments and investigations on the solvent, and as a result, finally found and confirmed the optimum characteristics of the solvent and its content, and completed the present invention.

That is, the method of coating a plastic material for an automobile in the present invention is a method of coating a plastic material for an automobile including the steps forming a three-layer coating film by sequentially coating the surface of the plastic material for the automobile with a water-based primer coating, a water-based metallic base coating used for a metal material for an automobile, and a high solid clear coating, and baking the formed three-layer coating film simultaneously at a temperature of 70 to 100˚C to be cured, in which the high solid clear coating contains a hydroxyl group-containing resin and a polyisocyanate compound as main components and a solvent having a solubility parameter of 8.9 to 10.5 and an evaporation rate of 30 or less as a part of the solvent in a ratio of 7 to 15% by weight to the total amount of the high solid clear coating, the hydroxyl group-containing resin has a weight average molecular weight of 3500 to 10000 and a hydroxyl value of 80 to 180 KOHmg/g, and contains a primary and a secondary hydroxyl group in a content ratio (the primary hydroxyl group / the secondary hydroxyl group) of 10/90 to 80/20 based on the hydroxyl value, the polyisocyanate compound has an average number of isocyanate groups per a molecule of 2.5 to 3.4, the equivalence ratio of the isocyanate group in the polyisocyanate compound and the hydroxyl group in the hydroxyl group-containing resin (NCO / OH) is 1.0 to 3.0, and the content of the non-volatile component in the two-layer coating film made of the water-based primer coating and the water-based metallic base coating is 75% by weight or more when coating with the high solid clear coating.

## C. EFFECTS OF THE INVENTION

According to the present invention, the following effects can be obtained without decreasing any of water resistance, solvent resistance, and appearance even when the water-based metallic base coating is used by designing a part of the solvent used for the clear coating so that any of values of solubility parameter (SP value), evaporation rate (V value), and content are in the specified range. That is, because the water-based base coating used in the metal material for an automobile can be sufficiently cured at a low temperature of 100˚C or less by increasing the transition amount of the polyisocyanate compound from the clear layer to the base layer further than conventional and by increasing curability of the water-based base coating while maintaining the film performance demanded of the clear layer such as solvent resistance and weathering resistance, the deformation of the plastic material is not caused and the water resistance of the multi-layer film does not decrease. Further, in this way, the water-based base coating used for the metal material can be applied to the plastic material as it is, and as a result, because the situation can be prevented in which colors of the metal material and the plastic material differ from each other when an automobile is assembled, each base coating for the metal material and for the plastic material does not have to be manufactured separately, and the decrease in manufacturing steps, resource saving, and energy saving become possible. In addition, time and labor that are needed for color adjustment becomes unnecessary.

## DETAILED DESCRIPTION OF THE INVENTION

The method of coating a plastic material in the present invention includes a step of forming a coating film and a step of baking the film. This coating method is described in detail below.

[Step of Forming Coating Film]

A step of forming a coating film is a step of forming three coating films containing each coating on the surface of a plastic material by sequentially coating the surface of the plastic material with a water-based primer coating, a water-based metallic base coating, and a high solid clear coating in this order.
First, the plastic material, the water-based primer coating, the water-based metallic base coating, and the high solid clear coating used in the step of forming a coating film are described in detail.
The plastic material used in the present invention is not especially limited. However, examples thereof include polyolefin such as polyethylene and polypropylene, polystyrene, ABS, vinyl chloride, polycarbonate, polyacetal, polyester, polyamide, polyurethane, PPO, polymethyl methacrylate, epoxy resin, phenol resin, and a melamine resin.
The water-based primer coating used in the present invention is a coating with which the surface of the plastic material is directly coated prior to the coat of the water-based metallic base coating and the high solid clear coating. The water-based primer coating contains a resin for primer and water as the main components, and appropriately contains pigments etc. The resin for primer is to make a cured coating film described later and the plastic material closely adhere to each other, and thus to improve water resistance, solvent resistance, etc. of the cured coating film, and is contained in the water-based primer coating in the form of emulsion and/or a water-soluble resin composition.
The emulsion is one in which a resin for primer is dispersed into a water medium in the form of particles, and the surface of particles is stabilized with an emulsifier, a surfactant, a dispersion agent, etc. Examples of the emulsion include acrylic resin emulsion in which an acrylic resin is used as the resin for primer, polyester resin emulsion, polyurethane resin emulsion, polyolefin resin emulsion, epoxy resin emulsion, and amino resin emulsion in which respective resin is used as the resin for primer simultaneously, only one or two kinds or more may be used in combination. Furthermore, depending on necessity, the emulsion may include a resin in which these resins are deformed, and it is effective to improve those performances. Among these, the emulsion is preferably one kind selected from acrylic resin emulsion, polyurethane resin emulsion, and polyolefin resin emulsion since the adhesiveness of the cured coating film in which a coating film of primer coating is cured and the plastic material improves further.
The water-soluble resin composition has a polar functional group such as a carboxyl group, a hydroxyl group, an amino group, and an ether group, and is a composition containing a water-soluble resin as the resin for primer that can be dissolved into a water medium due to its hydrophilicity. Examples of the resin for primer used in the water-soluble resin composition include water-soluble resins having an acrylic resin, a polyester resin, a polyurethane resin, an amino resin, a vinyl resin, a cellulosic resin, etc. as a basic structure, and only one or two kinds or more may be used in combination. Among these, the resin for primer contained in the water-soluble resin composition is preferably a water-soluble resin having at least one kind selected from an acrylic resin, a polyester resin, a polyurethane resin, and an amino resin as a basic structure because the adhesiveness to the plastic material can be improved.

The compounding ratio of the emulsion and the water-soluble resin composition contained in the water-soluble primer coating is not especially limited. However, in the case that the water-based primer coating is thermoplastic, the emulsion is preferably used as the main component because drying becomes easy due to the fast evaporation of water, there is less mixing with the water-based metallic base coating that is over applied, and coating film performance such as appearance, adhesiveness, and water resistance can be easily realized. Only the emulsion is more preferably used. On the other hand, in the case that the water-based primer coating is thermosetting, coating film performance such as adhesiveness and water resistance can be given without necessarily using the emulsion as the main component. Further, the emulsion may be used in combination, or only the water-soluble resin and the curing agent may be used. However, in the case that the water-soluble primer coating is thermosetting, a baking temperature and time becomes important after the water-based metallic base coating and the high solid clear coating are applied further. That is, a baking condition that is necessary for the water-based primer coating to sufficiently cure has to be set. However, when the water-based primer coating is unreasonably baked, the appearance and the adhesiveness may decrease because curability the coating film of the primer coating, the coating film of the water-based metallic base coating, and the coating film of the high solid clear coating differ.

The emulsion and the water-soluble resin composition contained in the water-based primer coating may be a thermosetting resin composition containing a curing agent such as an amino resin, a polyisocyanate compound, an oxazoline compound, a polycarbodiimide compound, and hydrazine compound.

The compounding ratio of water in the water-based primer coating is preferably 50 to 90% by weight to the entire water-based primer coating, and more preferably 60 to 80% by weight. When the compounding ratio of the water is less than 50% by weight, viscosity of the coating becomes high, and storage stability and coating workability decrease. On the other hand, when the compounding ratio of water exceeds 90% by weight, the ratio of the amount of the non-volatile part in the water-based primer coating decreases, coating efficiency becomes poor, and an abnormal form of the appearance such as sagging and foaming easily occurs. Moreover, the water-based primer coating may further contain an organic solvent, its compounding ratio is normally 40% by weight or less to the water contained in the water-based primer coating.

Examples of the organic solvent can include aromatic hydrocarbons such as toluene and xylene; aliphatic hydrocarbons such as hexane, heptane, and octane; alicyclic hydrocarbons such as cyclohexane, methyl cyclohexane, and cyclopentane; esters such as ethyl acetate, n-butyl acetate, isobutyl acetate, and amino acetate; ethers such as n-butyl ether and isobutyl ether; ketones such as acetone, methyl ethyl ketone, methyl isobutyl ketone, and cyclohexanone; alcohols such as methanol, ethanol, isopropanol, n-butanol, 2-butanol, n-propylene glycol, and isopropylene glycol; cellosolves such as ethylene glycol monomethyl ether, ethylene glycol monobutyl ether, and ethylene glycol monoethyl ether acetate; carbitol such as diethylene glycol monoethyl ether; propylene glycol alkyl ethers such as propylene glycol monomethyl ether, propylene glycol monoethyl ether, and propylene glycol monobutyl ether; and other solvents such as dioxane, N-methylpyrrolidone, dimethylformamide, and diacetone alcohol.

Examples of the pigments contained in the water-based primer coating include inorganic pigments such as carbon black, titanium oxide, iron oxide, chromium oxide, and prussian blue; and organic pigments such as azo-based, anthraquinone-based, perylene-based, quinacridone-based, indigo-based, and phthalocyanine-based, and only one or two kinds or more may be used in combination.

The water-based primer coating can contain a known auxiliary compounding agent depending on necessity. Examples of the auxiliary compounding agent include conductive imparting agents such as conductive carbon, conductive filler, and metal powder; an inorganic filler; an organic modifier; a stabilizer; a plasticizer; and an additive. The water-based primer coating especially preferably contains the conductive imparting agent because conductivity is given without reflecting on the moisture content of the coating film obtained from the water-based primer, and the water-based metallic base coating and/or the high solid clear coating can be easily applied through an electrostatic coating method.

The water-based metallic base coating used in the present invention is a coating used to form a coating film of the water-based metallic base coating by coating on the coating film of the primer coating as it is without baking and curing the coating film of the primer coating formed by coating with the water-based primer coating, and is used prior to use of the high solid clear coating.

The water-based metallic base coating is a coating common to the water-based metallic base coating used for a metal material for an automobile. Therefore, there becomes no need of manufacturing a separate water-based metallic base coating for the metal material and for the plastic material for an automobile; the decrease in manufacturing steps, resource saving, and energy saving become possible, and because a difference in colors does not occur in the metallic material and the plastic material for an automobile, the labor of adjusting colors can be omitted.

Examples of a resin for the water-based metallic base coating contained in the water-base metallic base coating include an acrylic resin, a polyester resin, a polyurethane resin, an epoxy resin, an amino resin, a vinyl resin, and a cellulosic resin, only one or two kinds or more may be used in combination. The resin for the water-based metallic base coating is normally compounded in the coating in the form of emulsion and/or a water-soluble resin composition. Moreover, the water-based metallic base coating may further contain a curing agent. Especially, a water-based metallic base coating of a melamine curable type having an acrylic resin base as the main body is preferably used as the water-based metallic base coating according to the present invention that is not conventionally used as the water-based base coating for a plastic material because sufficient curing cannot be performed at a low temperature although the water-based metallic base coating is often used as the water-based metallic base coating for a metal material.

The water-based metallic base coating contains coloring pigments and extenders as well as metallic pigments. Examples of the metallic pigments include aluminum flakes, copper bronze flakes, a mica-shaped iron oxide, mica flakes, a mica-shaped iron oxide coating with a metal oxide, and mica flakes coated with a metal oxide, and one or two kinds or more may be used in combination. Examples of the coloring pigments include inorganic pigments such as titanium dioxide, iron oxide, chromium oxide, lead chromate, and carbon black; and organic pigments such as azo lake pigments, insoluble azo-based pigments, condensed azo-based pigments, phthalocyanine-based pigments, indigo-based pigments, perynone-based pigments, perylene-based pigments, dioxazine-based pigments, quinacridone-based pigments, isoindolinone-based pigments, benzimidazolone-based pigments, diketopyrrolopyrrole-based pigments, and metal complex pigments, and examples of the extender include talc, calcium carbonate, precipitated barium sulfate, and silica. Only one or two kinds or more of these may be used in combination.

The water-based metallic base coating can contain a known auxiliary compounding agent depending on necessity. Examples of the auxiliary compounding agent include an inorganic filler, an organic modifier, a stabilizer, a plasticizer, and an additive.

The high solid clear coating used in the present invention is a coating used to form a coating film of the high solid clear coating, that is a top layer (a top layer) of the three-layer coating film by coating the high solid clear coating on the coating film of the water-based metallic base coating as it is without baking and curing the coating film of the water-based metallic base coating, and superior physical properties such as weathering resistance and solvent resistance are given to the curable coating film.

The high solid liquid clear coating contains a hydroxyl group-containing resin and a polyisocyanate compound as the main components, and contains a solvent having an SP value of 8.9 to 10.5 and a V value of 30 or less in a ratio of 7 to 15% by weight to the total amount of the high solid clear coating as a part of the solvent.

The hydroxyl group-containing resin can be obtained by polymerizing a monomer component of a hydroxyl group-containing unsaturated monomer with a known method, or can be obtained by combining monomer components selected from an acid group-containing unsaturated monomer other than that and other unsaturated monomers and polymerizing.

The hydroxyl group-containing unsaturated monomer is not especially limited, and examples of a primary hydroxyl group-containing unsaturated monomer include hydroxyethyl acrylate, hydroxyethyl methacrylate, Placcel FM1 ($\varepsilon$-caprolactone-modified hydroxyethyl methacrylate, manufactured by Daicel Chemical Industries, Ltd.), polyethylene glycol monoacrylate or monomethacrylate, and polypropylene glycol monoacrylate or monomethacrylate, and examples of a secondary hydroxyl group-containing unsaturated monomer include hydroxypropyl methacrylate and hydroxybutyl acrylate.

The acid group-containing unsaturated monomer is not especially limited, and examples thereof includes carboxylic acids such as acrylic acid, methacrylic acid, itaconic acid, crotonic acid, and maleic acid.

Other unsaturated monomers described above are not especially limited, and examples include an ester group-containing acrylic monomer such as methyl acrylate or methacrylate, ethyl acrylate or methacrylate, propyl acrylate or methacrylate, butyl acrylate or methacrylate, hexyl acrylate or methacrylate, ethylhexyl acrylate or methacrylate, and lauryl acrylate or methacrylate; a vinyl alcohol ester-based monomer of vinyl alcohol with carboxylic acid such as acetic acid and of propionic acid; an unsaturated hydrocarbon-based monomer such as styrene, $\alpha$-methylstyrene, vinylnaphthalene, butadiene, and isopropylene; a nitrile-based monomer such as acrylonitrile and methacrylonitrile; and an acrylamide-based monomer such as acrylamide, methacrylamide, N-methylolacrylamide, N,N-dimethylacrylamide, and diacetone acrylamide.

The weight average molecular weight of the hydroxyl group-containing resin is 3500 to 10000, and preferably 5000 to 9000. When the weight average molecular weight is less than 3500, the film performances required for a clear layer such as solvent resistance and appearance cannot be exhibited, and when the weight average molecular weight exceeds 10000, paint viscosity becomes high, coating operation becomes difficult in such a high viscosity situation, and thus the appearance of the coating film becomes poor. The ratio of the non-volatile part in the coating can decrease by using a volatile organic solvent. However, in this case, a problem of environmental contamination due to the organic solvent occurs.

The hydroxyl group value of the hydroxyl group-containing resin is 80 to 180 KOHmg/g, and preferably 120 to 150 KOHmg/g. When the hydroxyl group value is less than 80 KOHmg/g, the cross-linking density of the clear layer become insufficient and the solvent resistance of the multi-layer film decreases, and when the value exceeds 180 KOHmg/g, a large amount of the polyisocyanate compound becomes necessary.

Furthermore, the hydroxyl group in the above-described hydroxyl group-containing resin contains a primary and a secondary hydroxyl group, and its content ratio (the primary hydroxyl group / the secondary hydroxyl group) is 10/90 to 80/20 based on the hydroxyl value, and preferably 30/70 to 50/50. Here, the primary hydroxyl group has a high reactivity with the polyisocyanate compound is high and a characteristic that transition from the clear layer to the base layer hardly occurs, and the secondary hydroxyl group has a weak reactivity with the polyisocyanate compound and a characteristic that transition from the clear layer to the base layer easily occurs. Therefore, when the content ratio of the primary/secondary hydroxyl group is less than 10/90, curing in the clear layer becomes insufficient although the transition is easy, and the solvent resistance of the multi-layer film decreases. When the content ratio exceeds 80/20, curing in the clear layer is sufficient although transition becomes difficult, and water resistance of the multi-layer film decreases.

Further, an acid value of the hydroxyl group-containing resin is preferably 1 to 20 KOHmg/g, and more preferably 2 to 15 KOHmg/g. When the acid value is less than 1 KOHmg/g, there is a fear that curing in the clear coating becomes insufficient, and when the acid value exceeds 20 KOHmg/g, the curing speed of the clear coating becomes too fast, transition of the polyisocyanate compound from the clear layer to the base layer becomes insufficient, and there is a fear that the water-resistance of the multi-layer film decreases.

The glass transition temperature (Tg) of the hydroxyl group-containing resin is preferably -10˚C to 50˚C. When the glass transition temperature is less than -10˚C, there is a fear that contamination resistance and scratch resistance become poor as well as a fear that adhesiveness remains. When the temperature exceeds 50˚C, there is a fear that flexibility becomes poor as well as a fear that cracks are generated in the coating film.

An aliphatic-based or an alicyclic-based polyisocyanate compound can be preferably used as the above-described polyisocyanate compound.

The aliphatic-based or the alicyclic-based polyisocyanate compound is not especially limited, and examples thereof include hexamethylene diisocyanate, isophorone diisocyanate, and methylene biscyclohexylisocyanate, and further include an isocyanurate compound derived from these, an urethodione compound, an urethane compound, an allophanate compound, a biuret compound, and an adduct with trimethylolpropane.

The average number of isocyanate groups per one molecule of the above-described polyisocyanate compound is 2.5 to 3.4, and preferably 2.6 to 3.2. When the average number is less than 2.5, the crosslinking density of the clear layer becomes insufficient and solvent resistance of the multi-layer film decreases, and when the number exceeds 3.4, transition of the polyisocyanate compound from the clear layer to the base layer hardly occurs and water resistance of the multi-layer film decreases.

Furthermore, the equivalence ratio of the isocyanate group in the above-described polyisocyanate compound to the hydroxyl group in the above-described hydroxyl group-containing resin (NCO/OH) is 1.0 to 3.0, and preferably 1.2 to 2.8. When the equivalence ratio is less than 1.0, transition of the polyisocyanate compound from the clear layer and the base layer hardly occurs and the water resistance of the multi-layer film decreases, and when the ratio exceeds 3.0, the crosslinking density becomes insufficient and solvent resistance of the multi-layer film decreases.

As described above, the solvent used in the high solid clear coating contains a solvent having an SP value of 8.9 to 10.5 and a V value of 30 or less as a part of it. When the SP value is less than 8.9, because the solvent hardly penetrates from the clear layer to the base layer, it becomes difficult to disturb the orientation of the metallic pigments in the base layer, penetration of the polyisocyanate compound becomes insufficient, and the water resistance decreases. When the SP value exceeds 10.5, compatibility with the resin in the clear layer decreases and the appearance deteriorates. The above-described SP value is preferably 9.0 to 10.0. Further, when the V value exceeds 30, the clear coating evaporates at coating, it becomes difficult to disturb the orientation of the metallic pigments in the base layer, the penetration of the polyisocyanate compound becomes insufficient, and the water resistance decreases. The above-described V value is preferably 1 to 20.

In the present invention, the solubility parameter (SP value) represents a measure of the molecular interaction of a liquid molecule, and is a value calculated as below.

That is, it is calculated by adopting a method of calculating from the chemical composition of the substance, specifically using the following formula proposed by Fedors and values of $\Delta ei$ (evaporation energy of an atom or atomic group) and $\Delta vi$ (molar volume of an atom or atomic group) at 25˚C (refer to Yuji Harazaki, "Basic Science of Coating", Maki Bookstore, June 10, 1988, p. 54-57).

$$\text{SP Value } \delta = (\Delta E/V)^{1/2} = (\Sigma\Delta ei/\Sigma\Delta vi)^{1/2}$$

($\Delta E$: cohesion energy density, V: molar volume)

In the present invention, the evaporation speed of the solvent (V value) is a value calculated as follows.

First, 100 mg of a solvent for which V value is desired to be measured (a solvent sample) is placed in an aluminum container (cylindrical shape of 5 mm in inner diameter and 4 mm in height), and the time in which 90% by weight of the solvent evaporated is measured at 25˚C in nitrogen gas flow using a TG-DTA apparatus (manufactured by Seiko Instruments, Inc.)

A value of a relative evaporation speed of each solvent alone is calculated from the evaporation time of each solvent and the following formula by using 90% by weight evaporation time of n-butyl acetate as a standard and setting its evaporation rate to 100. In the case that the solvent is single, this value is made to be the evaporation speed of the solvent.

$$(\text{Evaporation speed of solvent}) = (90\% \text{ by weight evaporation time of n-butyl}$$

$$\text{acetate} / 90\% \text{ by weight evaporation time of the sample solvent}) \times 100$$

The solvent that satisfies the condition of the above-described SP value and V value is not limited, and examples include carbitol acetate (diethylene glycol monoethyl acetate), N-methyl-pyrrolidone, and ethylene glycol ethyl ether acetate.

The solvent that satisfies the above-described condition is contained in the high solid clear coating in a ratio of 7 to 15% by weight to the total amount of the high solid clear coating. When the ratio is less than 7% by weight, because the amount of the solvent penetrating from the clear layer to the base layer is small, it becomes difficult to disturb the orientation of the metallic pigments in the base layer, the penetration of the polyisocyanate compound becomes insufficient, and the water resistance decreases. Further, because the penetration to the base layer is insufficient, a large volume shrinkage of the base layer does not occur even when the solvent evaporates, and because re-orientation of the metallic pigments hardly occurs, the appearance becomes poor. When the ratio is more than 15% by weight, the solvent remains and becomes a cause of sagging. The ratio of the above-described solvent is more preferably 10 to 12% by weight.

The clear coating can contain a known auxiliary compounding agent depending on necessity. Examples include an organic modifier, a stabilizer, and an additive.

Next, operation of the coating film forming step is described in detail.

The coating film forming step is further divided into a water-based primer coating film forming step, a water-based metallic base coating film forming step, and a clear coating film forming step.

At first, the water-based primer coating film forming step is a step of forming a coating film of the primer coating by preparing a plastic material and by coating its surface with the water-based primer coating. Prior to coating its surface with the water-based primer coating, the plastic material may be dried and degreased depending on necessity. The water-based primer coating can be applied with a method such as spray coating, brush coating, roll coating, and flow coating, etc. for example. The coating amount of the water-based primer coating (thickness of dried film) is not especially limited. However, the coating amount is preferably 5 to 20 μm because the water resistance, solvent resistance, etc. improve.

In the water-based primer coating film forming step, the obtained coating film of the primer coating is kept as it is without baking and curing, and the coating film of the primer coating is coated with the water-based metallic base coating in the following water-based metallic base coating film forming step.

Next, the water-based metallic base coating film forming step is a step of forming the coating film of the water-based metallic base coating on the surface of the coating film of the primer coating by overcoating the coating film of the primer coating obtained in the water-based primer coating film forming step with the water-based metallic base coating.

The surface of the coating film of the primer coating is normally overcoated with the water-based metallic base coating using an air spray or an airless spray in order to improve the finished appearance and to obtain superior beauty.

Moreover, in the case of over applying the water-based metallic base coating with an electrostatic spray, a conductive material is preferably compounded into the water-based primer coating because conductivity can be certainly given by the coating film of the primer coating. The coating amount of the water-based metallic base coating (thickness of dried film) is not especially limited, and is preferably 10 to 30 μm because the polyisocyanate compound is easily impregnated, and solvent resistance etc. improve.

In the water-based metallic base coating film forming step, the coating film of the obtained water-based metallic base coating and the coating film of the primer coating obtained in the water-based primer coating film forming step are kept as they are without being baked and cured. Then, the coating film made of the water-based metallic base coating is overcoated with the clear coating in the following clear coating film forming step.

The non-volatile part of the two-layer film made of the above-described water-based primer coating and the water-based metallic base coating is 75% by weight or more when applying the clear coating described later. When the ratio is less than 75% by weight, because the polyisocyanate compound that transits from the clear layer to the water-based base layer causes a reaction with especially water in the volatile part, curing in the base layer is hindered, and poor appearance such as foaming of the clear layer is generated.

The method of adjusting the above-described volatile part is not especially limited, and an example includes a method of drying for 1 to 20 minutes at room temperature or under the condition of warm wind. Such drying treatment is preferably performed after forming the coating film of the primer coating, and/or after forming the coating film of the water-based metallic base coating because smoothness of the coating film of the primer coating is secured, bubble escaping etc. can be promoted, smoothness of the coating film of the water-based metallic base coating is secured, bubble escaping is promoted, the metallic pigments can be oriented when they are used, and the finished appearance of the curable coating film formed on the surface of the plastic material can be improved.

Moreover, the non-volatile part of the two-layer coating film made of the water-based primer coating and the water-based metallic base coating is calculated as follows.

First, a polypropylene material is used and the weight (g) of the material is measured (the measured value at this time is made to be A). Next, the primer coating is applied, and dried for 10 minutes at 80˚C. Furthermore, the base coating is applied and dried for each required time at 80˚C, and then weight (g) of the material and the two-layer coating film are measured (the measured value at this time is made to be B). Finally, the material and the two-layer coating film are dried for 3 hours at 95˚C, and the weight thereof is measured (the measured value at this time is made to be C).

The above-described measured values A, B, and C are inserted into the below formula, and the value that is obtained is the non-volatile part of the two-layer coating film made of the water-based primer coating and the water-based metallic base coating.

$$\text{(Non-volatile part of two-layer coating film made of water-based primer coating and water-based metallic base coating)} = (C{-}A) / (B{-}A) \times 100$$

Finally, the clear coating film forming step is a step of forming a coating film of the clear coating on the coating film of the water-based metallic base coating by applying the clear overcoating the surface of the coating film of the water-based metallic base coating obtained in the water-based metallic base coating film forming step.

The surface of the coating film made of the water-based metallic coating is normally overcoated with the clear coating using an air spray or an airless spray. However, the clear coating can preferably be applied using an electrostatic spray because the energy cost can decrease further and environmental contamination is prevented. The coating amount of the clear coating (thickness of dried film) is not especially limited, and is preferably 15 to 40 $\mu$m because the finished appearance, water resistance, solvent resistance etc. improve.

The non-volatile part at coating of the high solid clear coating is preferably 50 to 60% by weight. When the non-volatile part is less than 50% by weight, as a result, the amount of the solvent becomes large, it is not preferable environmentally, and there is a fear that the advantage of using the high solid clear coating may not be utilized, and when the non-volatile part exceeds 60% by weight, the coating becomes highly viscous and there is a fear that the coating operation becomes difficult.

Further, right after coating with the clear coating, the content ratio of the solvent that satisfies the above-described condition of the SP value and the V value to the coating film of the primer coating is preferably 9 to 18% by weight. The content ratio is more preferably 12 to 15% by weight. When the content ratio is less than 9% by weight, penetration of the polyisocyanate compound from the clear layer to the base layer becomes insufficient, and there is a fear that water resistance decreases. When the content ratio exceeds 18% by weight, a sagging phenomena of the clear film is generated and there is a fear that a poor appearance occurs.

Moreover, the content ratio of the solvent that satisfies the above-described condition to the coating film of the clear coating right after coating with the clear coating is calculated according procedures 1), 2), and 3) described below.

1) The non-volatile part of the coating film of the clear coating is measured and the total amount of the solvent is calculated with the following method.

An aluminum foil of 100 mm $\times$ 150 mm is prepared, and the weight of the aluminum foil is measured in advance to the fourth decimal place (the measured value is made to be "A" in the following formula (1)). Continuing, the high solid clear coating is sprayed on the aluminum foil, and its weight is measured to the fourth decimal place one minute after the spraying is completed (the measured value is made to be "B" in the following formula (1)).

The aluminum foil after spraying the clear coating is dried for 3 hours at 105˚C, and then the weight is measured to the fourth decimal place again (the measured value is made to be "C" in the following formula (1)).

The non-volatile part (%) of the coating film of the clear coating is calculated from these measured values and the following formula (1).

$$\text{Non-volatile part (\%) of coating film of clear coating} = (\,[C] - [A]\,) / (\,[B] - [A]\,) \times 100 \qquad (1)$$

The total solvent amount (%) in the coating film of the clear coating is calculated from the non-volatile part (%) of the coating film of the clear coating calculated above (the following formula (2)).

$$\text{Total solvent amount (\%) in coating film of clear coating (\%)} = (\,100 - \text{non-volatile part of coating film of clear coating}) \qquad (2)$$

2) The ratio of each solvent contained in the coating film of the clear coating is calculated with the following method. The high solid clear coating is sprayed on an aluminum foil of 100 mm × 150 mm, and the aluminum foil is sealed one minute after the spraying is completed. The solvent ratio (%) in the clear coating film sealed on the aluminum foil is obtained using a thermal decomposition gas chromatography. The solvent ratio (%) can be obtained by correcting the peak area of each solvent obtained with the gas chromatography with a relative sensitivity and making it as each solvent amount and by calculating the ratio of each solvent amount from the total solvent amount (sum of each solvent amount) in the sample (for example, the following formula (3) in the case of the solvent ratio (%) of the solvent A).

$$\text{Solvent ratio (\%) of solvent A} = \text{(Solvent amount of solvent A)} / \text{(total solvent amount in sample)} \times 100 \qquad (3)$$

The condition of the above-described gas chromatography is as follows.
Name of apparatus: GC-17A (manufactured by Shimadzu Cooperation)
Capillary column: DB-5
Injection temperature: 300˚C
Detector temperature: 300˚C
Detector: FID
Oven rising temperature condition: according to A) to C) described below, temperature is increased for total of 21.5 minutes.

    A) For 3 minutes at 40˚C.
    B) Increasing temperature at 10˚C /minute from 40˚C to 150˚C.
    C) Increasing temperature at 20˚C /minute from 150˚C to 300˚C.

3) The content ratio (%) of the solvent that satisfies the above-described condition to the coating film of the clear coating right after the coating with the clear coating is calculated from the total solvent amount (%) in the coating film of the clear coating obtained with the procedure 1) and the solvent ratio (%) of the solvent that satisfies the condition obtained with the procedure 2) (the following formula (4)).

$$\text{The content ratio (\%) of solvent that satisfies the condition to the coating film of clear coating} = \text{(total solvent amount in the coating film)} \times \text{(solvent ratio of the}$$

solvent that satisfies the condition in the present invention) / 100     (4)

In such a way as above, a coating film of a coating is formed containing each coating component by overcoating the surface of the plastic material with the water-based primer coating, the water-based metallic base coating, and the high solid clear coating in this order, and the following baking step is performed.

For the selection of the water-based primer coating, the water-based metallic base coating, and the high solid clear coating, there is a necessity of selecting a coating that can be cured and dried sufficiently in the baking step. When drying is insufficient and water or the solvent remains inside the cured coating film, the performance such as water resistance and solvent resistance becomes easily deteriorated in the cured coating film.

[Baking Step]

The baking step is a step of forming a curable coating film constituted from three layers of a curable coating film of the primer coating, a curable coating film of the water-based metallic base coating, and a curable coating film of the high solid clear coating on the surface of a plastic material by simultaneously baking a coating film of the primer coating, a coating film of the water-based metallic base coating, and a coating film of the high solid clear coating formed in the coating film forming step. Moreover, the temperature and time referred to in the present specification means the time for which the objective temperature has been continued to be kept practically on the surface of the plastic material, and more specifically means the temperature and time when the temperature is continued to be kept after the objective temperature is achieved without considering the time until the objective temperature is achieved.

The baking temperature is 70 to 100°C. When the baking temperature is within the above-described range, there is no fear that deformation occurs in the plastic material, and sufficient curing can be realized in a short time. The baking temperature is more preferably 80 to 90°C.

The baking time is normally 10 to 60 minutes, preferably 15 to 50 minute, and more preferably 20 to 40 minutes. When the baking time is less than 10 minutes, the curing of the coating film is insufficient, and performance such as water resistance and solvent resistance decrease in the cured coating film. On the other hand, when the baking time exceeds 60 minutes, adhesiveness etc. in re-recoating decreases due to too much curing, the total time of the coating step becomes long, and the energy cost becomes large.

An example of the heating apparatus used to simultaneously bake the coating films of coating includes a drying furnace in which the heat source is such as a hot wind, electricity, gas, and ultraviolet rays, and a drying furnace is preferably used in which two kinds or more of these heat sources are used in combination because the drying time is reduced.

DETAILED DESCRIPTION OF PREFERRED EMBODIMENTS

Below, the present invention is described more specifically by giving Manufacturing Examples, Examples, and Comparative Examples. Moreover, parts and % mean parts by weight and % by weight, respectively. Further, all values related to the compound amount of each substance in Table mean parts by weight.

[Manufacturing Example 1] Manufacturing of Water-Based Primer Coating

A dispersion resin and a dispersion paste were manufactured one by one, and a water-based primer coating was manufacturing using this.

<Manufacturing of Dispersion Resin>

Propylene glycol monomethyl ether (137 parts) was placed in a reactor equipped with stirring blades, a thermometer, a dropping device, a temperature controlling device, a nitrogen gas inlet, and a condenser, and the temperature was increased to 120°C under stirring while introducing nitrogen gas. Next, a mixture of 2-hydroxethyl methacrylate (29.0 parts), methacrylic acid (23.0 parts), isobutyl methacrylate (86.6 parts), and n-butyl acrylate (110.7 parts) and a solution in which t-butylperoxy-2-ethylhexanoate (2.5 parts) was dissolved into propylene glycol monomethyl ether (20 parts) were dropped into the reactor over 3 hours.

After the dropping was finished, the resulting mixture was matured for 1 hour, t-butylperoxy-2-ethylhexanoate (0.25 part) was dissolved into propylene glycol monomethyl ether (10 parts), and the obtained solution was dropped into the reactor over 1 hour.

After the resulting mixture was matured for 2 hours while kept at 120˚C, and cooled to 70˚C, dimethylaminoethanol (23.8 parts) was added, and stirred for 30 minutes. Next, a water-soluble acrylic resin was obtained by slowly dropping ion exchanged water (417 parts) while keeping the temperature at 70˚C, and then cooling.

The non-volatile part is adjusted to 30% using the ion exchanged water. The obtained water-soluble acrylic resin had pH of 8.2 and a weight average molecular weight of 42000.

<Manufacturing of Dispersion Paste>

The water-soluble acrylic resin (100 parts) (the non-volatile part 30%) obtained in the above-described <Manufacturing of Dispersion Resin>, carbon black EC600JD (manufactured by Akzo Nobel) (20 parts), titanium oxide Ti-Pure R-960 (manufactured by Du Pont) (112 parts), Surfynol GA (manufactured by Air Products and Chemicals, Inc.) (3 parts), and ion exchanged water (95 parts) dumped were placed in a container with a stirrer, pre-mixed by stirring for 30 minutes, and dispersed using a sand grinder mill, so that a dispersion paste with PWC of 80% (weight ratios of the pigments in the non-volatile part) and the non-volatile part of 50% was obtained.

<Manufacturing of Water-Based Primer Coating>

The dispersion paste (1000 parts) produced in the above-described <Manufacturing of Dispersion Paste> was placed in a container, NeoRez R972 (Urethane dispersion, manufactured by Avecia biologics Ltd., the non-volatile part 34%) (294 parts), Superchlon EN-432 (polypropylene chloride emulsion, manufactured by Nippon Paper Chemicals Co., Ltd., the non-volatile part 30%) (400 parts), and EpiRez 6006W (epoxy emulsion, manufactured by Japan Epoxy Resins Co., Ltd., the non-volatile part 70%) (114 parts) were placed in order, Nopco 8034L (manufactured by San Nopco, Ltd., active component 100%) (4 parts) and ion exchanged water (800 parts) were added, and then, the pH was adjusted to 8.0 using dimethylaminoethanol.

Primal ASE-60 (manufactured by Nippon Acryl Kagaku K.K., the non-volatile part 28%) that was made into pre-gel using dimethylaminoethanol was added into the adjusted mixture, viscosity was adjusted so as to be 30 seconds at 20˚C with No. 4 Ford Cup, and a water-based primer with the non-volatile part of 30.1% and pH of 8.1 was produced.

[Manufacturing Example 2] Manufacturing of Water-Based Metallic Base Coating

A core shell emulsion and a water-soluble acrylic resin as a dispersion resin were manufactured as described below, and a water-based metallic base coating was manufactured using these.

<Manufacturing of Core Shell Emulsion>

Ion exchange water (450 parts) and HS-10 (manufactured by Dai-ichi Kogyo Seiyaku Co., Ltd.) (3.6 parts) were placed in a reactor equipped with stirring blades, a thermometer, a dropping device, a temperature controlling device, a nitrogen gas inlet, and a condenser, and the temperature was increased to 80˚C under stirring while introducing nitrogen gas. Next, as a core part, using a mixture of methyl methacrylate (75.6 parts), n-butyl acrylate (21.6 parts), 2-hydroxethyl methacrylate (5.4 parts), and ethylene glycol dimethacrylate (5.4 parts) and a solution in which ammonium persulfate (1.08 parts) was dissolved into ion exchange water (54 parts), the above-described mixture and the above-described solution simultaneously were dropped into the reactor over 180 minutes. After the dropping was finished, the resulting mixture was matured for 60 minutes.

Next, as a shell part, using a mixture of methyl methacrylate (36.0 parts), methacrylic acid (5.5 parts), and n-butyl acrylate (30.5 parts) and a solution in which ammonium persulfate (0.72 part) was dissolved into ion exchange water (36 parts), the above-described mixture and the above-described solution simultaneously were dropped into the reactor over 60 minutes.

After the dropping was finished, the resulting mixture was matured for 60 minutes, and then a solution in which ammonium persulfate (0.18 part) was dissolved into ion exchange water (9 parts) was dropped into the reactor over 5 minutes. After the dropping was finished, the obtained mixture was matured for 60 minutes, cooled, and core shell emulsion of the non-volatile part of 23%.

<Manufacturing of Dispersion Resin>

Propylene glycol monomethyl ether (137 parts) was placed in a reactor equipped with stirring blades, a thermometer, a dropping device, a temperature controlling device, a nitrogen gas inlet, and a condenser, and the temperature was increased to 120˚C under stirring while introducing nitrogen gas.

Next, a mixture of 2-hydroxethyl methacrylate (29.0 parts), methacrylic acid (23.0 parts), isobutyl methacrylate (86.6 parts), and n-butyl acrylate (110.7 parts) and a solution in which t-butylperoxy-2-ethylhexanoate (2.5 parts) was dissolved into propylene glycol monomethyl ether (20 parts) were dropped into the reactor over 3 hours.

After the dropping was finished, the resulting mixture was matured for 1 hour, t-butylperoxy-2-ethylhexanoate (0.25 part) was dissolved into propylene glycol monomethyl ether (10 parts), and the obtained solution was dropped into the reactor over 1 hour. After the mixture was matured for 2 hours while kept at 120˚C, and cooled to 70˚C, dimethylaminoethanol (23.8 parts) was added, and stirred for 30 minutes.

After stirring for 30 minutes, a water-soluble acrylic resin was obtained by slowly dropping ion exchanged water (417 parts) while keeping the temperature to 70˚C, and then cooling.

The non-volatile part was adjusted to 30% using the ion exchanged water. The obtained water-soluble acrylic resin had pH of 8.2 and a weight average molecular weight of 42000.

<Manufacturing of Water-Based Metallic Base Coating>

The water-soluble acrylic resin manufactured in the above-described <Manufacturing of Dispersion Resin> (66.7 parts), Aluminum Paste WJE7640 (manufactured by Toyo Aluminum K.K.) (27.3 parts), and Surfynol 440 (manufactured by Air Products and Chemicals, Inc.) (0.7 part) were placed in a container, stirred sufficiently, and aluminum was dispersed.

Next, under stirring, the core shell emulsion produced in the above-described <Manufacturing of Core Shell Emulsion> (217 parts) was placed in the container, and the pH was adjusted to 8.5 using dimethylaminoethanol.

After the pH was adjusted, urethane dispersion R-9603 (manufactured by Avecia biologics Ltd.) and methylated melamine Cymel 325 (manufactured by Mitsui Cytec Co, Ltd.) were placed in order, and 2-ethylhexyl glycol (20 parts), Surfynol 440 (3.3 parts), BYK341 (manufactured by BYK Chemie Japan K.K.) (1.0 part), and BYK025 (manufactured by BYK Chemie Japan K.K.) were placed in and stirred, the pH was adjusted to 8.5 again using dimethylaminoethanol, and the non-volatile part was adjusted to 20% by adding ion exchanged water (210 parts). After that, Primal ASE-60 (manufactured by Nippon Acryl Kagaku K.K., the non-volatile part 28%) was diluted to the non-volatile part of 20% using ion exchange water, it was made into pre-gel using dimethylaminoethanol and was added into this, viscosity was adjusted so as to be 45 seconds at 20˚C with No. 4 Ford Cup, and a water-based metallic base coating with the non-volatile part of 25% and pH of 8.5 was produced.

[Manufacturing Example 3] Manufacturing of High Solid Clear Coating

A hydroxyl group-containing resin and a polyisocyanate compound were manufactured as described below, and a high solid clear coating was manufactured using these.

<Manufacturing of Hydroxyl Group-Containing Resin>

Acrylic resins AC-1 to AC-13, that were hydroxyl group-containing resins, were obtained with the compounding shown in Table 1. Moreover, for the non-volatile part of the hydroxyl group-containing resin, not only monomers were simply considered to be the non-volatile part, but 70% by weight of t-butylperoxy-2-ethylhexanoate, that was a polymerization initiator, also reacts with monomers, and was considered to be the non-volatile part. That is, the ratio of the non-volatile part to the entire amount was calculated specifically with the total of the amount of monomers and 70% by weight of the used amount of t-butylperoxy-2-ethylhexanoate as the weight of the non-volatile part.

Furthermore, t-butylperoxy-2-ethylhexanoate reacts with monomers as described above, and constitutes a part of the hydroxyl group-containing resin. However, because the effect of the hydroxyl group and the acid group originated in t-butylperoxy-2-ethylhexanoate given to the characteristics of the hydroxyl group-containing resin was small, they were ignored in the calculation.

Table 1

| Acrylic resin | | AC-1 | AC-2 | AC-3 | AC-4 | AC-5 | AC-6 | AC-7 | AC-8 | AC-9 | AC-10 | AC-11 | AC-12 | AC-13 |
|---|---|---|---|---|---|---|---|---|---|---|---|---|---|---|
| Numerical values of properties | Hydroxyl value | 140 | 90 | 170 | 140 | 140 | 140 | 140 | 60 | 200 | 140 | 140 | 140 | 140 |
| | Acid value | 5 | 5 | 5 | 5 | 5 | 5 | 5 | 5 | 5 | 5 | 5 | 5 | 5 |
| | Primary hydroxyl group/secondary hydroxyl group | 40/60 | 40/60 | 40/60 | 70/30 | 30/70 | 40/60 | 40/60 | 40/60 | 40/60 | 100/0 | 0/100 | 40/60 | 40/60 |
| | Tg(°C) | 20 | 20 | 20 | 20 | 20 | 20 | 20 | 20 | 20 | 20 | 20 | 20 | 20 |
| | Weight average molecular weight | 7000 | 6800 | 6900 | 7200 | 7100 | 9200 | 3800 | 7300 | 6900 | 7200 | 7100 | 12000 | 3200 |
| Monomers | 2-Hydroxyethyl methacrylate | 58.5 | 37.6 | 71.0 | 102.3 | 43.9 | 58.5 | 58.5 | 25.1 | 125.3 | 146.2 | 0.0 | 58.5 | 58.5 |
| | 2-Hydroxypropyl methacrylate | 97.2 | 62.5 | 117.9 | 48.6 | 113.3 | 97.2 | 97.2 | 41.6 | 131.9 | 0.0 | 161.9 | 97.2 | 97.2 |
| | Styrene | 45.0 | 45.0 | 45.0 | 45.0 | 45.0 | 45.0 | 45.0 | 45.0 | 45.0 | 45.0 | 45.0 | 45.0 | 45.0 |
| | t-Butyl methacrylate | 112.9 | 151.2 | 90.0 | 109.2 | 114.2 | 112.9 | 112.9 | 174.2 | 74.7 | 105.5 | 117.9 | 112.9 | 112.9 |
| | n-Butyl acrylate | 133.2 | 150.3 | 122.7 | 141.5 | 130.2 | 133.2 | 133.2 | 160.7 | 115.7 | 149.9 | 121.8 | 133.2 | 133.2 |
| | Methacrylic acid | 3.5 | 3.5 | 3.5 | 3.5 | 3.5 | 3.5 | 3.5 | 3.5 | 3.5 | 3.5 | 3.5 | 3.5 | 3.5 |
| Subtotal of monomers | | 450.3 | 450.1 | 450.1 | 450.1 | 450.1 | 450.3 | 450.3 | 450.1 | 496.1 | 450.1 | 450.1 | 450.3 | 450.3 |
| Polymerization initiator | t-Butylperoxy-2-ethylhexanoate | 45.0 | 45.0 | 45.0 | 45.0 | 45.0 | 36.0 | 67.5 | 45.0 | 45.0 | 45.0 | 45.0 | 29.3 | 81.0 |
| | Butyl acetate | 90.0 | 90.0 | 90.0 | 90.0 | 90.0 | 90.0 | 90.0 | 90.0 | 90.0 | 90.0 | 90.0 | 150.0 | 90.0 |
| Solvent charged | Butyl acetate | 140.0 | 140.0 | 140.0 | 140.0 | 140.0 | 140.0 | 140.0 | 140.0 | 140.0 | 140.0 | 140.0 | 140.0 | 140.0 |
| Post-shot polymerization initiator | t-Butylperoxy-2-ethylhexanoate | 0.9 | 0.9 | 0.9 | 0.9 | 0.9 | 0.9 | 0.9 | 0.9 | 0.9 | 0.9 | 0.9 | 0.9 | 0.9 |
| | Butyl acetate | 10.0 | 10.0 | 10.0 | 10.0 | 10.0 | 10.0 | 10.0 | 10.0 | 10.0 | 10.0 | 10.0 | 10.0 | 10.0 |
| Total | | 736.2 | 736.0 | 736.0 | 736.0 | 736.0 | 727.2 | 758.7 | 736.0 | 782.0 | 736.0 | 736.0 | 780.5 | 772.2 |
| Non-volatile part (%) | | 65.5 | 65.5 | 65.5 | 65.5 | 65.5 | 65.5 | 65.7 | 65.5 | 67.5 | 65.5 | 65.5 | 60.4 | 65.7 |

EP 1 958 982 B1

14

A specific manufacturing example is shown below.

- Manufacturing of AC-1-

Butyl acetate (140 parts) was placed as a solvent in a reactor equipped with stirring blades, a thermometer, a dropping device, a temperature controlling device, a nitrogen gas inlet, and a condenser, and the temperature was increased to 125°C under stirring while introducing nitrogen gas. Next, as a monomer, a mixture of 2-hydroxethyl methacrylate (58.5 parts), 2-hydroxpropyl methacrylate (97.2 parts), styrene (45 parts), t-butyl methacrylate (112.9 parts), n-butyl acrylate (133.2 parts), and methacrylic acid (3.5 parts), and as a polymerization initiator, a solution in which t-butylperoxy-2-ethylhexanoate (45 parts) was dissolved into butyl acetate (90 parts) were dropped into the reactor over 3 hours.

After the dropping was finished, the resulting mixture was matured for 1 hour, the polymerization initiator t-butylperoxy-2-ethylhexanoate (0.9 part) was dissolved into butyl acetate (10 parts), and the resulting solution was dropped into the reactor over 1 hour. After the mixture was matured for 2 hours while kept at 125°C, and cooled, the reaction was completed.

The weight average molecular weight of the obtained acrylic resin was 7000, and the non-volatile part was 65%.

- Manufacturing of AC-2 to 13 -

AC-2 to 13 were manufactured with the same method as in the above-described manufacturing of AC-1. After the polymerization, the non-volatile part was adjusted to 65% using butyl acetate.

For AC-12, the non-volatile part was adjusted to 60% because the viscosity became high when the non-volatile part was made to be 65%.

<Manufacturing of Polyisocyanate compound>

Polyisocyanate compound NCO-1 to 5 were obtained with the compounding shown in Table 2.

Table 2

| Polyisocyanate compound | NCO-1 | NCO-2 | NCO-3 | NCO-4 | NCO-5 |
| --- | --- | --- | --- | --- | --- |
| Average number of NCO groups | 3.0 | 2.7 | 3.2 | 2.0 | 3.5 |
| Takenate D178N | 16.65 | 41.66 | 0 | 100 | 0 |
| Sumidur N3300 | 0 | 0 | 0 | 0 | 100 |
| Desmodur N3600 | 83.35 | 58.34 | 100 | 0 | 0 |
| Total | 100 | 100 | 100 | 100 | 100 |
| Non-volatile part (%) | 100 | 100 | 100 | 100 | 100 |

A specific manufacturing example is shown below.

- Manufacturing of NCO-1 -

NCO-1 was prepared by placing Takenate D178N (manufactured by Mitsui Takeda Chemicals, Inc.) (16.65 parts) in a container and by placing Desmodur N3600 (manufactured by Sumitomo-Bayer Urethane Co., Ltd.) (83.35 parts) while stirring well.

- Manufacturing of NCO-2 to 5 -

NCO-2 to 5 were manufactured with the same method as in the above-described NCO-1. Moreover, Sumidur N3300 used in NCO- 5 was a curing agent manufactured by Sumitomo-Bayer Urethane Co., Ltd.

<Manufacturing of High Solid Clear Coating>

High solid clear coating CL-1 to 30 were obtained with the compounding shown in Tables 3 and 4.

Table 3

| High solid clear coating | | CL-1 | CL-2 | CL-3 | CL-4 | CL-5 | CL-6 | CL-7 | CL-8 | CL-9 | CL-10 | CL-11 | CL-12 | CL-13 | CL-14 | CL-15 |
|---|---|---|---|---|---|---|---|---|---|---|---|---|---|---|---|---|
| Hydroxyl group-containing resin | | AC-1 | AC-2 | AC-3 | AC-4 | AC-5 | AC-1 | AC-1 | AC-1 | AC-1 | AC-6 | AC-7 | AC-1 | AC-1 | AC-1 | AC-1 |
| Polyisocyanate compound | | NCO-1 | NCO-1 | NCO-1 | NCO-1 | NCO-1 | NCO-2 | NCO-3 | NCO-1 | NCO-1 | NCO-1 | NCO-1 | NCO-1 | NCO-1 | NCO-1 | NCO-1 |
| NCO/OH ratio | | 1.5 | 1.5 | 1.5 | 1.5 | 1.5 | 1.5 | 1.5 | 1.1 | 2.8 | 1.5 | 1.5 | 1.5 | 1.5 | 1.5 | 1.5 |
| Main chemical | Hydroxyl group-containing resin | 54.64 | 54.64 | 54.64 | 54.64 | 54.64 | 54.64 | 54.64 | 54.64 | 54.64 | 54.64 | 54.64 | 54.64 | 54.64 | 54.64 | 54.64 |
| | BYK-310 | 0.26 | 0.26 | 0.26 | 0.26 | 0.26 | 0.26 | 0.26 | 0.26 | 0.26 | 0.26 | 0.26 | 0.26 | 0.26 | 0.26 | 0.26 |
| | Byketol-Special | 0.26 | 0.26 | 0.26 | 0.26 | 0.26 | 0.26 | 0.26 | 0.26 | 0.26 | 0.26 | 0.26 | 0.26 | 0.26 | 0.26 | 0.26 |
| | 1% DBTDL solution | 0.36 | 0.36 | 0.36 | 0.36 | 0.36 | 0.36 | 0.36 | 0.36 | 0.36 | 0.36 | 0.36 | 0.36 | 0.36 | 0.36 | 0.36 |
| | Tinuvin 292 | 0.39 | 0.39 | 0.39 | 0.39 | 0.39 | 0.39 | 0.39 | 0.39 | 0.39 | 0.39 | 0.39 | 0.39 | 0.39 | 0.39 | 0.39 |
| | Tinuvin 384-2 | 0.78 | 0.78 | 0.78 | 0.78 | 0.78 | 0.78 | 0.78 | 0.78 | 0.78 | 0.78 | 0.78 | 0.78 | 0.78 | 0.78 | 0.78 |
| Subtotal of solid part | | 36.76 | 36.76 | 36.76 | 36.76 | 36.76 | 36.76 | 36.76 | 36.76 | 36.76 | 36.76 | 36.76 | 36.76 | 36.76 | 36.76 | 36.76 |
| Diluting solvent | Butyl acetate | 9.03 | 2.67 | 12.84 | 9.03 | 9.03 | 9.82 | 8.54 | 4.28 | 26.83 | 9.03 | 9.03 | 12.59 | 5.46 | 9.03 | 9.03 |
| | Methyl ethyl ketone | 15.00 | 15.00 | 15.00 | 15.00 | 15.00 | 15.00 | 15.00 | 15.00 | 15.00 | 15.00 | 15.00 | 15.00 | 15.00 | 15.00 | 15.00 |
| | Carbitol acetate | 13.07 | 11.18 | 14.20 | 13.07 | 13.30 | 12.93 | 11.66 | 18.36 | 13.07 | 13.07 | 9.50 | 9.50 | 16.63 | - | - |
| | N-Methylpyrrolidone | - | - | - | - | - | - | - | - | - | - | - | - | - | 13.07 | - |
| | Cellosolve acetate | - | - | - | - | - | - | - | - | - | - | - | - | - | - | 13.07 |
| | Ethoxyethyl propionate | - | - | - | - | - | - | - | - | - | - | - | - | - | - | - |
| | Propylene glycol monomethyl ether acetate | - | - | - | - | - | - | - | - | - | - | - | - | - | - | - |
| | Dipropylene glycol monomethyl ether | - | - | - | - | - | - | - | - | - | - | - | - | - | - | - |

EP 1 958 982 B1

16

(continued)

| High solid clear coating | | CL-1 | CL-2 | CL-3 | CL-4 | CL-5 | CL-6 | CL-7 | CL-8 | CL-9 | CL-10 | CL-11 | CL-12 | CL-13 | CL-14 | CL-15 |
|---|---|---|---|---|---|---|---|---|---|---|---|---|---|---|---|---|
| Curing agent | Polyisocyanate compound | 25.02 | 16.08 | 30.38 | 25.02 | 25.02 | 26.13 | 24.34 | 18.35 | 50.04 | 25.02 | 25.02 | 25.02 | 25.02 | 25.02 | 25.02 |
| Total of solid part | | 61.78 | 52.84 | 67.14 | 61.78 | 61.78 | 62.89 | 61.10 | 55.11 | 86.80 | 61.78 | 61.78 | 61.78 | 61.78 | 61.78 | 61.78 |
| Total | | 118.81 | 101.62 | 129.12 | 118.81 | 118.81 | 120.94 | 117.50 | 105.98 | 166.92 | 118.81 | 118.81 | 118.81 | 118.81 | 118.81 | 118.81 |
| Non-volatile part [%] | | 52.0 | 52.0 | 52.0 | 52.0 | 52.0 | 52.0 | 52.0 | 52.0 | 52.0 | 52.0 | 52.0 | 52.0 | 52.0 | 52.0 | 52.0 |

Table 4

| High solid clear coating | | CL-16 | CL-17 | CL-18 | CL-19 | CL-20 | CL-21 | CL-22 | CL-23 | CL-24 | CL-25 | CL-26 | CL-27 | CL-28 | CL-29 | CL-30 |
|---|---|---|---|---|---|---|---|---|---|---|---|---|---|---|---|---|
| Hydroxyl group-containing resin | | AC-8 | AC-9 | AC-10 | AC-11 | AC-1 | AC-1 | AC-1 | AC-1 | AC-12 | AC-13 | AC-1 | AC-1 | AC-1 | AC-1 | AC-1 |
| Polyisocyanate compound | | NCO-1 | NCO-1 | NCO-1 | NCO-1 | NCO-4 | NCO-5 | NCO-1 | NCO-1 | NCO-1 | NCO-1 | NCO-1 | NCO-1 | NCO-1 | NCO-1 | NCO-1 |
| NCO/OH ratio | | 1.5 | 1,5 | 1.5 | 1.5 | 1.5 | 1.5 | 0.8 | 3.5 | 1.5 | 1.5 | 1.5 | 1.5 | 1.5 | 1.5 | 1.5 |
| Main chemical | Hydroxyl group-containing resin | 54.64 | 54.64 | 54.64 | 54.64 | 54.64 | 54.64 | 54.64 | 54.64 | 59.20 | 54.64 | 54.64 | 54.64 | 54.64 | 54.64 | 54.64 |
| | BYK-310 | 0.26 | 0.26 | 0.26 | 0.26 | 0.26 | 0.26 | 0.26 | 0.26 | 0.26 | 0.26 | 0.26 | 0.26 | 0.26 | 0.26 | 0.26 |
| | Byketol-Special | 0.26 | 0.26 | 0.26 | 0.26 | 0.26 | 0.26 | 0.26 | 0.26 | 0.26 | 0.26 | 0.26 | 0.26 | 0.26 | 0.26 | 0.26 |
| | 1% DBTDL solution | 0.36 | 0.36 | 0.36 | 0.36 | 0.36 | 0.36 | 0.36 | 0.36 | 0.36 | 0.36 | 0.36 | 0.36 | 0.36 | 0.36 | 0.36 |
| | Tinuvin 292 | 0.39 | 0.39 | 0.39 | 0.39 | 0.39 | 0.39 | 0.39 | 0.39 | 0.39 | 0.39 | 0.39 | 0.39 | 0.39 | 0.39 | 0.39 |
| | Tinuvin 384-2 | 0.78 | 0.78 | 0.78 | 0.78 | 0.78 | 0.78 | 0.78 | 0.78 | 0.78 | 0.78 | 0.78 | 0.78 | 0.78 | 0.78 | 0.78 |
| Subtotal of solid part | | 36.76 | 36.76 | 36.76 | 36.76 | 36.76 | 36.76 | 36.76 | 36.76 | 36.76 | 36.76 | 36.76 | 36.76 | 36.76 | 36.76 | 36.76 |
| Diluting solvent | Butyl acetate | 0.00 | 16.66 | 9.03 | 9.03 | 11.97 | 9.49 | 0.72 | 32.77 | 4.47 | 9.03 | 14.97 | 1.90 | 9.03 | 9.03 | 9.03 |
| | Methyl ethyl ketone | 13.85 | 15.00 | 15.00 | 15.00 | 15.00 | 15.00 | 15.00 | 15.00 | 15.00 | 15.00 | 15.00 | 15.00 | 15.00 | 15.00 | 15.00 |
| | Carbitol acetate | 10.04 | 15.34 | 13.07 | 13.07 | 13.94 | 13.21 | 10.60 | 20.13 | 13.07 | 13.07 | 7.13 | 20.20 | - | - | - |
| | N-Methylpyrrolidone | - | - | - | - | - | - | - | - | - | - | - | - | - | - | - |
| | Cellosolve acetate | - | - | - | - | - | - | - | - | - | - | - | - | - | - | - |
| | Ethoxyethyl propionate | - | - | - | - | - | - | - | - | - | - | - | - | 13.07 | - | - |
| | Propylene glycol monomethyl ether acetate | - | - | - | - | - | - | - | - | - | - | - | - | - | 13.07 | - |
| | Dipropylene glycol monomethyl ether | - | - | - | - | - | - | - | - | - | - | - | - | - | - | 13.07 |

EP 1 958 982 B1

(continued)

| High solid clear coating | | CL-16 | CL-17 | CL-18 | CL-19 | CL-20 | CL-21 | CL-22 | CL-23 | CL-24 | CL-25 | CL-26 | CL-27 | CL-28 | CL-29 | CL-30 |
|---|---|---|---|---|---|---|---|---|---|---|---|---|---|---|---|---|
| Curing agent | Polyisocyanate compound | 10.72 | 35.74 | 25.02 | 25.02 | 29.15 | 25.67 | 13.34 | 58.38 | 25.02 | 25.02 | 25.02 | 25.02 | 25.02 | 25.02 | 25.02 |
| Total of solid part | | 47.48 | 72.50 | 61.78 | 61.78 | 65.91 | 62.43 | 50.10 | 95.14 | 61.78 | 61.78 | 61.78 | 61.78 | 61.78 | 61.78 | 61.78 |
| Total | | 91.31 | 139.42 | 118.81 | 118.81 | 126.75 | 120.06 | 96.35 52.0 | 182.96 | 118.81 | 118.81 | 118.81 | 118.81 | 118.81 | 118.81 | 118.81 |
| Non-volatile part {%} | | 52.0 | 52.0 | 52.0 | 52.0 | 52.0 | 52.0 | 52.0 | 52.0 | 52.0 | 52.0 | 52.0 | 52.0 | 52.0 | 52.0 | 52.0 |

A specif manufacturing example is shown below.

- Manufacturing of CL-1 -

A main chemical of the clear coating was prepared by placing AC-1 produced in <Manufacturing of Hydroxyl Group-Containing Resin> (54.64 parts) in a container, placing BYK-310 (manufactured by BYK Chemie Japan K.K.) (0.26 part), Byketol-Special (manufactured by BYK Chemie Japan K.K.) (0.26 part), a butyl acetate solution of 1% dibutyltin dilaurate (DBTDL) (0.36 part), Tinuvin 292 (manufactured by Chiba Specialty Chemicals Co., Ltd.) (0.39 part), Tinuvin 384-2 (manufactured by Chiba Specialty Chemicals Co., Ltd.) (0.78 part), butyl acetate (9.03 parts), methyl ethyl ketone (MEK) (15.00 parts), and carbitol acetate (13.07 parts) one by one, and stirring until it became uniform.
Moreover, the solvent used this time "carbitol acetate" has a SP value of 9.0 and an evaporation speed of 1. Other solvents don't satisfy the condition of the SP value of 8.9 to 10.5 and the V value of 30 or less.
The main chemical produced above and NCO-1 produced in the manufacturing example of the polyisocyanate compound were mixed at a ratio of the main chemical (93.79 parts) and the polyisocyanate compound (25.02 parts), and a high solid clear coating CL-1 was obtained. At this time, the non-volatile part of the above-described high solid clear coating was 52.0%.

- Manufacturing of CL-2 to 30 -

CL-2 to 30 were manufactured with the same method as in the above-described CL-1.
Moreover, in CL-14, 15, and CL-28 to 30, another solvent was used instead of the solvent used in the manufacturing of CL-1 (carbitol acetate).
The solvent used in the manufacturing of CL-14 "N-methyl-pyrrolidone" has a SP value of 10.1 and a V value of 6, and the solvent used in the manufacturing of CL-15 "Cellosolve acetate (ethylene glycol ethyl ether acetate)" has a SP value of 8.9 and a V value of 19.
The solvent used in the manufacturing of CL-28 "ethoxy ethyl propionate (ethyl-3-ethoxypropionate)" has a SP value of 8.8 and a V value of 12, the solvent used in the manufacturing of CL-29 "propylene glycol monomethyl ether acetate" has a SP value of 8.9 and a V value of 37, and the solvent used in the manufacturing of CL-30 "dipropylene glycol monomethyl ether" has a SP value 10.7 and a V value 0.02.
Therefore, CL-14 and 15 were solvents that satisfied every conditions of the SP value of 8.9 to 10.5 and the V value of 30 or less, and the SP value of CL-28 and 30 and the V value of CL-29 respectively don't satisfy the above-described conditions.

[Examples 1 to 22 and Comparative Examples 1 to 18]

As described below, coating plates A1 to 22 corresponding to Examples 1 to 22 and coating plates B1 to 18 corresponding to Comparative Examples 1 to 18 were manufactured and submitted to the test described later. The water-based primer coating, the water-based metallic base coating, and high solid clear coating used in the production of each coating plate are as shown in Tables 5 and 6 for Examples 1 to 22 and in Tables 7 and 8 for Comparative Examples 1 to 18.

Table 5

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| | Final coating plate | | A1 | A2 | A3 | A4 | A5 | A6 | A7 | A8 | A9 | A10 | A11 |
| Primer layer | Primer coating | | Manufacturing Example 1 | Manufacturing Example 1 | Manufacturing Example 1 | Manufacturing Example 1 | Manufacturing Example 1 | Manufacturing Example 1 | Manufacturing Example 1 | Manufacturing Example 1 | Manufacturing Example 1 | Manufacturing Example 1 | Manufacturing Example 1 |
| | Non-volatile part in primer coating film | | 95% | 95% | 95% | 95% | 95% | 95% | 95% | 95% | 95% | 95% | 95% |
| Base layer | Base coating | | Manufacturing Example 2 | Manufacturing Example 2 | Manufacturing Example 2 | Manufacturing Example 2 | Manufacturing Example 2 | Manufacturing Example 2 | Manufacturing Example 2 | Manufacturing Example 2 | Manufacturing Example 2 | Manufacturing Example 2 | Manufacturing Example 2 |
| | Non-volatile part in two-layer coating film (primer, base) | | 90% | 90% | 90% | 90% | 90% | 90% | 90% | 90% | 90% | 90% | 90% |
| Clear layer | | Clear coating | CL-1 | CL-2 | CL-3 | CL-4 | CL-5 | CL-6 | CL-7 | CL-8 | CL-9 | CL-10 | CL-11 |
| | Hydroxyl group-containing resin | Hydroxyl group-containing resin | AC-1 | AC-2 | AC-3 | AC-4 | AC-5 | AC-1 | AC-1 | AC-1 | AC-1 | AC-6 | AC-7 |
| | | Hydroxyl value | 140 | 90 | 170 | 140 | 140 | 140 | 140 | 140 | 140 | 140 | 140 |
| | | Primary hydroxyl group/secondary hydroxyl group | 40/60 | 40/60 | 40/60 | 70/30 | 30/70 | 40/60 | 40/60 | 40/60 | 40/60 | 40/60 | 40/60 |
| | | Acid value | 5 | 5 | 5 | 5 | 5 | 5 | 5 | 5 | 5 | 5 | 5 |
| | | Weight average molecular | 7000 | 6800 | 6900 | 7200 | 7100 | 7000 | 7000 | 7000 | 7000 | 9200 | 3800 |
| | Polyisocyanate compound | Polyisocyanate compound | NCO-1 | NCO-1 | NCO-1 | NCO-1 | NCO-1 | NCO-2 | NCO-3 | NCO-1 | NCO-1 | NCO-1 | NCO-1 |
| | | Average number of NCO groups | 3.0 | 3.0 | 3.0 | 3.0 | 3.0 | 2.7 | 3.2 | 3.0 | 3.0 | 3.0 | 3.0 |
| | Compounding | NCO/OH | 1.5 | 1.5 | 1.5 | 1.5 | 1.5 | 1.5 | 1.5 | 1.1 | 2.8 | 1.5 | 1.5 |
| | Solvent | Whether there is solvent that satisfies conditions of present invention | Yes (CBA) | Yes (CBA) | Yes (CBA) | Yes (CBA) | Yes (CBA) | Yes (CBA) | Yes (CBA) | Yes (CBA) | Yes (CBA) | Yes (CBA) | Yes (CBA) |
| | | SP value | 9.0 | 9.0 | 9.0 | 9.0 | 9.0 | 9.0 | 9.0 | 9.0 | 9.0 | 9.0 | 9.0 |
| | | V value | 1 | 1 | 1 | 1 | 1 | 1 | 1 | 1 | 1 | 1 | 1 |
| | | Content (% by weight) in coating | 11 | 11 | 11 | 11 | 11 | 11 | 11 | 11 | 11 | 11 | 11 |
| | | Content (% by weight) in coating film | 14.2 | 12.8 | 13.5 | 14.4 | 13.4 | 12.9 | 13.7 | 13.7 | 14.1 | 12.3 | 13.3 |
| | Non-volatile part (% by weight) in clear coating at coating with clear coating | | 52 | 52 | 52 | 52 | 52 | 52 | 52 | 52 | 52 | 52 | 52 |
| Baking temperature when simultaneously baking three-layer coating film | | | 90°C | 90°C | 90°C | 90°C | 90°C | 90°C | 90°C | 90°C | 90°C | 90°C | 90°C |
| Results of evaluation | Coating film performance | Initial adhesiveness | O | O | O | O | O | O | O | O | O | O | O |
| | | Water resistance | O | O | O | O | O | O | O | O | O | O | O |
| | | Solvent resistance | O | O | O | O | O | O | O | O | O | O | O |
| | Property of coating | VOC | O | O | O | O | O | O | O | O | O | O | O |
| | Appearance | Gloss | O | O | O | O | O | O | O | O | O | O | O |
| | | Metal orientation right after clear coating | O | O | O | O | O | O | O | O | O | O | O |
| | | Metal orientation after clear baking | O | O | O | O | O | O | O | O | O | O | O |
| | | Skin | O | O | O | O | O | O | O | O | O | O | O |
| | | Sagging | O | O | O | O | O | O | O | O | O | O | O |

EP 1 958 982 B1

Table 6

| | | | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|---|
| | Final coating plate | | A12 | A13 | A14 | A15 | A16 | A17 | A18 | A19 | A20 | A21 | A22 |
| Primer layer | Primer coating | | Manufac-turing Example 1 | Manufac-turing Example 1 | Manufac-turing Example 1 | Manufac-turing Example 1 | Manufac-turing Example 1 | Manufac-turing Example 1 | Manufac-turing Example 1 | Manufac-turing Example 1 | Manufac-turing Example 1 | Manufac-turing Example 1 | Manufac-turing Example 1 |
| | Non-volatile part in primer coating film | | 95% | 95% | 95% | 95% | 95% | 95% | 95% | 95% | 95% | 95% | 95% |
| Base layer | Base coating | | AR20001F7 | WBC713T1F7 | HW-10 1F7 | Manufac-turing Example 2 | Manufac-turing Example 2 | Manufac-turing Example 2 | Manufac-turing Example 2 | Manufac-turing Example 2 | Manufac-turing Example 2 | Manufac-turing Example 2 | Manufac-turing Example 2 |
| | Non-volatile part in two-layer coating film (primer, base) | | 90% | 90% | 90% | 78% | 95% | 90% | 90% | 90% | 90% | 90% | 90% |
| Clear layer | | Clear coating | CL-1 | CL-1 | CL-1 | CL-1 | CL-1 | CL-1 | CL-1 | CL-12 | CL-13 | CL-14 | CL-15 |
| | Hydroxyl group-containing resin | Hydroxyl group-containing resin | AC-1 | AC-1 | AC-1 | AC-1 | AC-1 | AC-1 | AC-1 | AC-1 | AC-1 | AC-1 | AC-1 |
| | | Hydroxyl value | 140 | 140 | 140 | 140 | 140 | 140 | 140 | 140 | 140 | 140 | 140 |
| | | Primary hydroxyl group/secondary hydroxyl group | 40/60 | 40/60 | 40/60 | 40/60 | 40/60 | 40/60 | 40/60 | 40/60 | 40/60 | 40/60 | 40/60 |
| | | Acid value | 5 | 5 | 5 | 5 | 5 | 5 | 5 | 5 | 5 | 5 | 5 |
| | | Weight average molecular | 7000 | 7000 | 7000 | 7000 | 7000 | 7000 | 7000 | 7000 | 7000 | 7000 | 7000 |
| | Polyisocyanate compound | Polyisocyanate compound | NCO-1 | NCO-1 | NCO-1 | NCO-1 | NCO-1 | NCO-1 | NCO-1 | NCO-1 | NCO-1 | NCO-1 | NCO-1 |
| | | Average number of NCO groups | 3.0 | 3.0 | 3.0 | 3.0 | 3.0 | 3.0 | 3.0 | 3.0 | 3.0 | 3.0 | 3.0 |
| | Compounding | NCO/OH | 1.5 | 1.5 | 1.5 | 1.5 | 1.5 | 1.5 | 1.5 | 1.5 | 1.5 | 1.5 | 1.5 |
| | Solvent | Whether there is solvent that satisfies conditions of present invention | Yes (CBA) | Yes (CBA) | Yes (CBA) | Yes (CBA) | Yes (CBA) | Yes (CBA) | Yes (CBA) | Yes (CBA) | Yes (CBA) | Yes (NMP) | Yes (Celloace) |
| | | SP value | 9.0 | 9.0 | 9.0 | 9.0 | 9.0 | 9.0 | 9.0 | 9.0 | 9.0 | 10.1 | 8.9 |
| | | V value | 1 | 1 | 1 | 1 | 1 | 1 | 1 | 1 | 1 | 6 | 19 |
| | | Content (% by weight) in coating | 11 | 11 | 11 | 11 | 11 | 11 | 11 | 8 | 14 | 11 | 11 |
| | | Content (% by weight) in coating film | 14.3 | 13.1 | 13.9 | 12.4 | 13.4 | 13.1 | 14.6 | 9.8 | 16.6 | 12.3 | 11.3 |
| | Non-volatile part (% by weight) in clear coating at coating with clear coating | | 52 | 52 | 52 | 52 | 52 | 52 | 52 | 52 | 52 | 52 | 52 |
| Baking temperature when simultaneously baking three-layer coating film | | | 90°C | 90°C | 90°C | 90°C | 90°C | 75°C | 100°C | 90°C | 90°C | 90°C | 90°C |
| Results of evaluation | Coating film performance | Initial adhesiveness | O | O | O | O | O | O | O | O | O | O | O |
| | | Water resistance | O | O | O | O | O | O | O | O | O | O | O |
| | | Solvent resistance | O | O | O | O | O | O | O | O | O | O | O |
| | Property of coating | VOC | O | O | O | O | O | O | O | O | O | O | O |
| | Appearance | Gloss | O | O | O | O | O | O | O | O | O | O | O |
| | | Metal orientation right after clear coating | O | O | O | O | O | O | O | O | O | O | O |
| | | Metal orientation after clear baking | O | O | O | O | O | O | O | O | O | O | O |
| | | Skin | O | O | O | O | O | O | O | O | O | O | O |
| | | Sagging | O | O | O | O | O | O | O | O | O | O | O |

EP 1 958 982 B1

Table 7

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| | Final coating plate | | B1 | B2 | B3 | B4 | B5 | B6 | B7 | B8 | B9 |
| Primer layer | Primer coating | | Manufacturing Example 1 | Manufacturing Example 1 | Manufacturing Example 1 | Manufacturing Example 1 | Manufacturing Example 1 | Manufacturing Example 1 | Manufacturing Example 1 | Manufacturing Example 1 | Manufacturing Example 1 |
| | Non-volatile part in primer coating film | | 95% | 95% | 95% | 95% | 95% | 95% | 95% | 95% | 95% |
| Base layer | Base coating | | Manufacturing Example 2 | Manufacturing Example 2 | Manufacturing Example 2 | Manufacturing Example 2 | Manufacturing Example 2 | Manufacturing Example 2 | Manufacturing Example 2 | Manufacturing Example 2 | Manufacturing Example 2 |
| | Non-volatile part in two-layer coating film (primer, base) | | 90% | 90% | 90% | 90% | 90% | 90% | 90% | 90% | 90% |
| | Clear coating | | CL-16 | CL-17 | CL-18 | CL-19 | CL-20 | CL-21 | CL-22 | CL-23 | CL-24 |
| | Hydroxyl group-containing resin | Hydroxyl group-containing resin | AC-8 | AC-9 | AC-10 | AC-11 | AC-1 | AC-1 | AC-1 | AC-1 | AC-12 |
| | | Hydroxyl value | 60 | 200 | 140 | 140 | 140 | 140 | 140 | 140 | 140 |
| | | Primary hydroxyl group/ secondary hydroxyl group | 40/60 | 40/60 | 100/0 | 0/100 | 40/60 | 40/60 | 40/60 | 40/60 | 40/60 |
| | | Acid value | 5 | 5 | 5 | 5 | 5 | 5 | 5 | 5 | 5 |
| | | Weight average molecular weight | 7000 | 6900 | 7200 | 7100 | 7000 | 7000 | 7000 | 7000 | 12000 |
| | Polyisocyanate compound | Polyisocyanate compound | NCO-1 | NCO-1 | NCO-1 | NCO-1 | NCO-4 | NCO-5 | NCO-1 | NCO-1 | NCO-1 |
| | | Average number of NCO groups | 3. 0 | 3. 0 | 3. 0 | 3. 0 | 2.0 | 3.5 | 3. 0 | 3. 0 | 3. 0 |

EP 1 958 982 B1

23

(continued)

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| Clear layer | Compounding | NCO/OH | 1.5 | 1.5 | 1.5 | 1.5 | 1.5 | 1.5 | 0.8 | 3.5 | 1.5 |
| | Solvent | Whether there is solvent that satisfies conditions of present invention | Yes (CBA) | Yes (CBA) | Yes (CBA) | Yes (CBA) | Yes (CBA) | Yes (CBA) | Yes (CBA) | Yes (CBA) | Yes (CBA) |
| | | SP value | 9.0 | 9.0 | 9.0 | 9.0 | 9.0 | 9.0 | 9.0 | 9.0 | 9.0 |
| | | V value | 1 | I | 1 | 1 | 1 | 1 | 1 | 1 | 1 |
| | | Content (% by weight) in coating | 11 | 11 | 11 | 11 | 11 | 11 | 11 | 11 | 11 |
| | | Content (% by weight) in coating film | 14,2 | 12.8 | 13.5 | 14.4 | 13.4 | 12.9 | 13.7 | 13.7 | 14.1 |
| | Non-volatile part (% by weight) in clear coating at coating with clear coating | | 52 | 52 | 52 | 52 | 52 | 52 | 52 | 52 | 52 |
| Baking temperature when simultaneously baking three-layer coating film | | | 90˚C | 90˚C | 90˚C | 90˚C | 90˚C | 90˚C | 90˚C | 90˚C | 90˚C |
| | Coating film performance | Initial adhesiveness | ○ | ○ | ○ | ○ | ○ | ○ | ○ | ○ | ○ |
| | | Water resistance | × | ○ | × | ○ | ○ | × | × | ○ | ○ |
| | | Solvent resistance | × | ○ | ○ | × | × | ○ | ○ | × | ○ |

EP 1 958 982 B1

24

(continued)

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| Results of evaluation | Property of coating | VOC | ○ | ○ | ○ | ○ | ○ | ○ | ○ | ○ | × |
| | Appearance | Gloss | ○ | ○ | ○ | ○ | ○ | ○ | ○ | ○ | ○ |
| | | Metal orientation right after clear coating | ○ | ○ | ○ | ○ | ○ | ○ | ○ | ○ | ○ |
| | | Metal orientation after clear baking | ○ | × | ○ | ○ | ○ | ○ | ○ | × | ○ |
| | | Skin | ○ | ○ | ○ | ○ | ○ | ○ | ○ | ○ | × |
| | | Sagging | ○ | ○ | ○ | ○ | ○ | ○ | ○ | × | ○ |

Table 8

| | | | Comparative Example 10 | Comparative Example 11 | Comparative Example 12 | Comparative Example 13 | Comparative Example 14 | Comparative Example 15 | Comparative Example 16 | Comparative Example 17 | Comparative Example 18 |
|---|---|---|---|---|---|---|---|---|---|---|---|
| Final coating plate | | | B10 | B11 | B12 | B13 | B14 | B15 | B16 | B17 | B18 |
| Primer layer | Primer coating | | Manufacturing Example 1 | Manufacturing Example 1 | Manufacturing Example 1 | Manufacturing Example 1 | Manufacturing Example 1 | Manufacturing Example 1 | Manufacturing Example 1 | Manufacturing Example 1 | Manufacturing Example 1 |
| | Non-volatile part in primer coating film | | 95% | 95% | 95% | 95% | 95% | 95% | 95% | 95% | 95% |
| Base layer | Base coating | | Manufacturing Example 2 | Manufacturing Example 2 | Manufacturing Example 2 | Manufacturing Example 2 | Manufacturing Example 2 | Manufacturing Example 2 | Manufacturing Example 2 | Manufacturing Example 2 | Manufacturing Example 2 |
| | Non-volatile part in two-layer coating film (primer, base) | | 90% | 65% | 90% | 90% | 90% | 90% | 90% | 90% | 90% |
| Clear layer | Clear coating | | CL-25 | CL-1 | CL-1 | CL-1 | CL-26 | CL-27 | CL-28 | CL-29 | CL-30 |
| | Hydroxyl group-containing resin | Hydroxyl group-containing resin | AC-13 | AC-1 | AC-1 | AC-1 | AC-1 | AC-1 | AC-1 | AC-1 | AC-1 |
| | | Hydroxyl value | 140 | 140 | 140 | 140 | 140 | 140 | 140 | 140 | 140 |
| | | Primary hydroxyl group/ secondary hydroxyl group | 40/60 | 40/60 | 40/60 | 40/60 | 40/60 | 40/60 | 40/60 | 40/60 | 40/60 |
| | | Acid value | 5 | 5 | 5 | 5 | 5 | 5 | 5 | 5 | 5 |
| | | Weight average molecular weight | 3200 | 7000 | 7000 | 7000 | 7000 | 7000 | 7000 | 7000 | 7000 |
| | Polyisocyanate compound | Polyisocyanate compound | NCO-1 | NCO-1 | NCO-1 | NCO-1 | NCO-1 | NCO-1 | NCO-1 | NCO-1 | NCO-1 |
| | | Average number of NCO groups | 3. 0 | 3. 0 | 3. 0 | 3. 0 | 3. 0 | 3. 0 | 3. 0 | 3. 0 | 3. 0 |

EP 1 958 982 B1

26

(continued)

| | | | Comparative Example 10 | Comparative Example 11 | Comparative Example 12 | Comparative Example 13 | Comparative Example 14 | Comparative Example 15 | Comparative Example 16 | Comparative Example 17 | Comparative Example 18 |
|---|---|---|---|---|---|---|---|---|---|---|---|
| | Compounding | NCO/OH | 1.5 | 1.5 | 1.5 | 1.5 | 1.5 | 1.5 | 1.5 | 1.5 | 1.5 |
| | Solvent | Whether there is solvent that satisfies conditions of present invention | Yes (CBA) | Yes (CBA) | Yes (CBA) | Yes (CBA) | Yes (CBA) | Yes (CBA) | No (EEP) | No (PMA) | No (DPM) |
| | | SP value | 9.0 | 9.0 | 9.0 | 9.0 | 9.0 | 9.0 | 8.8 | 8.9 | 10.7 |
| | | V value | 1 | 1 | 1 | 1 | 1 | 1 | 12 | 37 | 0.02 |
| | | Content (% by weight) in coating | 11 | 11 | 11 | 11 | 6 | 17 | 0 | 0 | 0 |
| | | Content (% by weight) in coating film | 12.3 | 13.3 | 14.3 | 13.1 | 7.1 | 20.9 | 0 | 0 | 0 |
| | Non-volatile part (% by weight) in clear coating at coating with clear coating | | 52 | 52 | 52 | 52 | 52 | 52 | 52 | 52 | 52 |
| Baking temperature when simultaneously baking three-layer coating film | | | 90˚C | 90˚C | 60˚C | 110˚C | 90˚C | 90˚C | 90˚C | 90˚C | 90˚C |
| | Coating film performance | Initial adhesiveness | ○ | ○ | × | ○ | ○ | ○ | ○ | ○ | ○ |
| | | Water resistance | × | × | × | ○ | × | ○ | × | × | × |
| | | Solvent resistance | × | ○ | × | ○ | ○ | ○ | ○ | ○ | × |

(continued)

| Results of evaluation | Property of coating | VOC | Comparative Example 10 | Comparative Example 11 | Comparative Example 12 | Comparative Example 13 | Comparative Example 14 | Comparative Example 15 | Comparative Example 16 | Comparative Example 17 | Comparative Example 18 |
|---|---|---|---|---|---|---|---|---|---|---|---|
| | Property of coating | VOC | ○ | ○ | ○ | ○ | ○ | ○ | ○ | ○ | ○ |
| | Appearance | Gloss | ○ | × | ○ | ○ | ○ | ○ | ○ | ○ | × |
| | | Metal orientation right after clear coating | ○ | ○ | ○ | ○ | × | ○ | × | × | ○ |
| | | Metal orientation after clear baking | × | × | ○ | ○ | × | ○ | ○ | × | ○ |
| | | Skin | ○ | ○ | ○ | × | ○ | ○ | ○ | ○ | ○ |
| | | Sagging | × | × | ○ | ○ | ○ | × | ○ | ○ | ○ |

In each high solid clear coating CL-1 to 30 used in the above-described Tables 5 to 8, the content of the solvent in the coating film right after each of the above-described clear coatings was applied ("Solvent Content in Coating Film" in Tables 5 to 8) was calculated according to the above-described procedure, that was a procedure of a measurement of the non-volatile part (%) of the coating film of the clear coating and the total solvent amount (%), a measurement of a solvent ratio (%) of the solvent that satisfies the conditions of the present invention by gas chromatography, and a calculation from the total solvent amount (%) of the above-described coating film of the clear coating and the solvent ratio (%) of the solvent that satisfies the conditions of the present invention.

The non-volatile part (%) in the coating film, the total solvent amount (%) in the coating film, the solvent ratio (%) of the solvent that satisfies the conditions of the present invention, and the content (%) of the solvent that satisfies the conditions of the present invention in the coating film are shown in Table 9.

Table 9

|  | Non-volatile part (%) in coating film | Total solvent amount (%) in coating film | Solvent ratio (%) of solvent that satisfies conditions of present invention | Content (%) in coating film |
|---|---|---|---|---|
| Example 1 | 71.3 | 28.7 | 49.5 | 14.2 |
| Example 2 | 72.4 | 27.6 | 46.4 | 12.8 |
| Example 3 | 72.4 | 27.6 | 48.9 | 13.5 |
| Example 4 | 73.0 | 27.0 | 53.3 | 14.4 |
| Example 5 | 71.6 | 28.4 | 47.2 | 13.4 |
| Example 6 | 71.0 | 29.0 | 44.5 | 12.9 |
| Example 7 | 72.0 | 28.0 | 48.9 | 13.7 |
| Example 8 | 71.9 | 28.1 | 48.8 | 13.7 |
| Example 9 | 72.7 | 27.3 | 51.6 | 14.1 |
| Example 10 | 72.1 | 27.9 | 44.1 | 12.3 |
| Example 11 | 71.2 | 28.8 | 46.2 | 13.3 |
| Example 12 | 70.9 | 29.1 | 49.1 | 14.3 |
| Example 13 | 72.6 | 27.4 | 47.8 | 13.1 |
| Example 14 | 72.7 | 27.3 | 50.9 | 13.9 |
| Example 15 | 71.5 | 28.5 | 43.5 | 12.4 |
| Example 16 | 71.2 | 28.8 | 46.5 | 13.4 |
| Example 17 | 72.4 | 27.6 | 47.5 | 13.1 |
| Example 18 | 71.1 | 28.9 | 50.5 | 14.6 |
| Example 19 | 73.8 | 26.2 | 37.4 | 9.8 |
| Example 20 | 69.4 | 30.6 | 54.2 | 16.6 |
| Example 21 | 73.6 | 26.4 | 46.6 | 12.3 |
| Example 22 | 75.1 | 24.9 | 45.4 | 11.3 |
| Comparative Example 1 | 72.0 | 28.0 | 50.7 | 14.2 |
| Comparative Example 2 | 71.8 | 28.2 | 45.4 | 12.8 |
| Comparative Example 3 | 72.5 | 27.5 | 49.1 | 13.5 |

(continued)

| | Non-volatile part (%) in coating film | Total solvent amount (%) in coating film | Solvent ratio (%) of solvent that satisfies conditions of present invention | Content (%) in coating film |
|---|---|---|---|---|
| Comparative Example 4 | 71.9 | 28.1 | 51.2 | 14.4 |
| Comparative Example 5 | 73.0 | 27.0 | 49.6 | 13.4 |
| Comparative Example 6 | 71.6 | 28.4 | 45.4 | 12.9 |
| Comparative Example 7 | 72.4 | 27.6 | 49.6 | 13.7 |
| Comparative Example 8 | 72.2 | 27.8 | 49.3 | 13.7 |
| Comparative Example 9 | 71.8 | 28.2 | 50.0 | 14.1 |
| Comparative Example 10 | 72.7 | 27.3 | 45.1 | 12.3 |
| Comparative Example 11 | 71.6 | 28.4 | 46.8 | 13.3 |
| Comparative Example 12 | 72.3 | 27.7 | 51.6 | 14.3 |
| Comparative Example 13 | 72.6 | 27.4 | 47.8 | 13.1 |
| Comparative Example 14 | 75.6 | 24.4 | 29.1 | 7.1 |
| Comparative Example 15 | 67.9 | 32.1 | 65.1 | 20.9 |
| Comparative Example 16 | 73.5 | 26.5 | 0.0 | 0.0 |
| Comparative Example 17 | 75.8 | 24.2 | 0.0 | 0.0 |
| Comparative Example 18 | 71.2 | 28.8 | 0.0 | 0.0 |

<Example 1>

Spray coating was performed with the water-based primer coating on a polypropylene material (TSOP-6, manufactured by Japan Polypropylene Corporation) cleaned with isopropyl alcohol so that the thickness of dried film becomes 10 $\mu$m. After the water-based primer coating was applied, the coating was dried for 10 minutes at 80˚C. Next, after the coated plate was left alone and cooled to room temperature, spray coating was performed with the water-based metallic base coating so that the thickness of dried film becomes 15 $\mu$m, the coating plate was left at room temperature for 2 minutes, and then was dried at 80˚C for 10 minutes. Next, after leaving alone and cooling to room temperature, spray coating was performed with the high solid clear coating so that the thickness of dried film becomes 25 $\mu$m, and the coating plate was left at room temperature for 5 minutes. Next, the coating plate was baked at 90˚C for 20 minutes, and a final coating plate A1 that was cured and dried was obtained.

<Examples 2 to 14>

Final coating plates A2 to 14 were obtained with the same method as in Example 1.

<Example 15>

Final coating plate A15 was obtained in the same manner as in Example1 except that the drying temperature and time of the water-metallic base coating was changed from "at 80˚C for 10 minutes" to "at 80˚C for 5 minutes".

<Example 16>

Final coating plate A16 was obtained in the same manner as in Example 1 except that the drying temperature and time of the water-metallic base coating was changed from "at 80˚C for 10 minutes" to "at 80˚C for 20 minutes".

<Example 17>

Final coating plate A17 was obtained in the same manner as in Example 1 except that the temperature and the time when simultaneously baking and curing a three-layer coating film formed with the water-based primer coating, the water-based metallic base coating, and the high solid clear coating was changed from "at 90˚C for 20 minutes" to "at 75˚C for 20 minutes".

<Example 18>

Final coating plate A18 was obtained in the same manner as in Example 1 except that the temperature and the time when simultaneously baking and curing a three-layer coating film formed with the water-based primer coating, the water-based metallic base coating, and the high solid clear coating was changed from "at 90˚C for 20 minutes" to "at 100˚C for 20 minutes".

<Examples 19 to 22>

Final coating plates A19 to 22 were obtained with the same method as in Example 1.

<Comparative Examples 1 to 10>

Final coating plates B1 to 10 were obtained with the same method as in Example 1.

<Comparative Example 11>

Final coating plate B11 was obtained in the same manner as in Example 1 except that the drying temperature and time of the water-metallic base coating was changed from "at 80˚C for 10 minutes" to "at 80˚C for 2 minutes".

<Comparative Example 12>

Final coating plate B12 was obtained in the same manner as in Example 1 except that the temperature and the time when simultaneously baking and curing a three-layer coating film formed with the water-based primer coating, the water-based metallic base coating, and the high solid clear coating was changed from "at 90˚C for 20 minutes" to "at 60˚C for 60 minutes".

<Comparative Example 13>

Final coating plate B13 was obtained in the same manner as in Example 1 except that the temperature and the time when simultaneously baking and curing a three-layer coating film formed with the water-based primer coating, the water-based metallic base coating, and the high solid clear coating was changed from "at 90˚C for 20 minutes" to "at 110˚C for 20 minutes".

<Comparative Examples 14 to 18>

Final coating plates B14 to 18 were obtained with the same method as in Example 1.

Final coating plates A1 to A22 and B 1 to B18 produced in Examples 1 to 22 and Comparative Examples 1 to 18 were left for one day, and then the physical properties of the cured coating film were evaluated with the following test method. The result is shown in Tables 5 to 8 together with types of the water-based primer coating, the water-based metallic base coating, and the high solid clear coating used in the production of each coating plate. Moreover, in Tables 5 to 8, "Hydroxyl group value" means a hydroxyl group value of the hydroxyl group-containing resin, "Primary hydroxyl group / Secondary hydroxyl group" means the content ratio (based on the hydroxyl group value) of the primary hydroxyl group and the secondary hydroxyl group contained in hydroxyl group in the hydroxyl group-containing resin, "Average number of NCO groups" means the average number of isocyanate groups per one molecule of the polyisocyanate compound, and "NCO / OH" means the equivalent ratio of isocyanate groups in the polyisocyanate compound to hydroxyl groups in the hydroxyl group-containing resin. Further, in Tables 5 to 8, the row of "whether there is solvent that satisfies conditions of present invention" shows whether a solvent that satisfies the conditions of the present invention, that is the conditions of the SP value and the V value, is contained in the clear coating or not, and the type of the solvent in the case that it is contained and a solvent used for substitution in the case that it is not contained are shown in parenthesis respectively. At that time, "carbitol acetate" is abbreviated as "CBA", "N-methyl-pyrrolidone" is abbreviated as "NMP", "Cellosolve acetate" is abbreviated as "Celloace", "propylene glycol methyl ether acetate" is abbreviated as "PMA", "ethoxy ethyl propionate" is abbreviated as "EEP", and "dipropylene glycol methyl ether" is abbreviated as "DPM". The SP value and the V value are the SP value and the V value of the above-described solvent respectively. Furthermore, "content (% by weight) in coating" in Tables 5 to 8 is a content ratio of the solvent that satisfies the conditions of the present invention in the coating at coating with the clear coating, and "content (% by weight) in coating film" is the content ratio of the solvent that satisfies the conditions of the present invention in the coating film of the clear coating right after coating with the clear coating.

[Testing Method]

<Initial Adhesiveness>

A checker board tape peeling test of JIS K5600 was performed on the final coating plate.

The case of no peeling at all was marked with ○, and the case that even a slight peeling was confirmed was marked with ×.

<Water Resistance>

After the final coating plate was soaked into warm water of 40˚C for 240 hours, the coating plate was dried at room temperature for 1 day, and blisters (swelling of the coating film due to penetration of water) were evaluated visually based on ASTM D714 and at the same time, the checker board tape peeling test of JIS K5600 was performed.

The case that abnormality was not recognized in the appearance compared with before the test and there was no peeling was marked with ○, and the case that abnormality of the appearance was recognized or that even a slight peeling was recognized was marked with ×.

<Solvent Resistance>

A load of 500g with gauze containing xylene was applied on the final coating plate, an 8 times back and forth rubbing test was performed with a JSPS rubbing tester (manufactured by Suga Test Instruments Co., Ltd.), and whether there were abnormalities such as adhesiveness, wrinkles, swelling, and peeling or not was evaluated.

The case where no abnormalities were recognized was marked as ○, and the case that even a little abnormality was recognized was marked as ×.

<VOC>

The amount of the non-volatile part was calculated when viscosity of the high solid clear coating was adjusted so as to be 25 seconds at 20˚C with Ford Cup #4, the case that the non-volatile part was 50% by weight or more was marked ○, and the case that the non-volatile part was less than 50% by weight was marked ×.

Here, in the solvent-type coating, the weight (g) of the volatile organic solvent part contained in coating 1L is referred to as "VOC", and the above-described VOC can be calculated from the above-described ratio of the non-volatile part contained in the coating. Specifically, it is calculated with the below formula based on ASTM D3960.

$$\text{VOC} = 1000 \times (\text{Specific gravity value of coating}) \times (1 - \text{Ratio of coating}$$

non-volatile part / 100)

The specific gravity value in the above formula is a value measured based on JIS K5600.

Therefore, the smaller the non-volatile part is, the larger the value of VOC (a large amount of the organic solvent is necessary), and it is considered to be not preferable from a viewpoint of environmental safeguards.

<Appearance>

Gloss, metal orientation right after clear coating, metal orientation after clear baking, skin, and sagging were evaluated on the final coating plate with the following criteria.

(Gloss)

60°-Gloss was measured using Micro-TRI- Gloss (manufactured by Toyo Seiki Seisakusho, Ltd.) The case that the gloss is 98 or more was marked with ○, and the case that it is less than 98 was marked with ×.

(Metal Orientation Right after Clear Coating)

The case that disturbance of the metallic pigments was large and the appearance became black was marked with ○, and the case of less disturbance of metal was marked with ×.

(Metal Orientation after Baking of Clear Coating)

The L value (75°) before clear coating (L1) and the L value (75°) after baking the clear coating (L2) were measured, the case that L2 - L1 value was 2.5 or less was marked with ○, and the case that it was 2.5 or more was marked with ×.

(Skin)

W1, W2, W3, and W4 were measured using Wave-scan T (manufactured by Toyo Seiki Seisakusho, Ltd.) The case that all values of W1, W2, W3, and W4 were 10 or less was marked with ○, and the case even one exceeded 10 was marked with ×.

(Sagging)

W1, W2, W3, and W4 were measured using Wave-scan T (manufactured by Toyo Seiki Seisakusho, Ltd.) keeping the plate vertical from leaving at room temperature to the baking. The case that all values of W1, W2, W3, and W4 were 15 or less was marked with ○, and the case even one exceeded 15 was marked with ×.

[Evaluation]

(1) Standard is satisfied in all tests in Examples 1 to 22 according to the present invention, and a very superior multi-layer film can be formed on the plastic material by using the present invention.

(2) In any Comparative Examples, standard is not satisfied in any of the tests. Specifically it is as described below.

In Comparative Examples 1 and 2, the hydroxyl group value of the hydroxyl group-containing resin that is one of main components of the clear coating is not in the range of 80 to 180 KOHmg/g. Because of that, Comparative Example 1 in which the hydroxyl group value is less than 80 KOHmg/g is inferior in water resistance and solvent resistance, and Comparative Example 2 in which the value exceeds 180 KOHmg/g is inferior in the appearance.

In Comparative Examples 3 and 4, the content ratio of the primary and secondary hydroxyl group (primary hydroxyl group / secondary hydroxyl group) contained in the above-described hydroxyl group-containing resin the hydroxyl group value of the hydroxyl group-containing resin is not in the range of 10/90 to 80/20 (using hydroxyl groups as standard). Because of that, Comparative Example 3 in which the ratio of the primary/secondary hydroxyl group exceeds 80 / 20 is inferior in water resistance, and Comparative Example 4 in which the hydroxyl group value is less than 10/90 is inferior in the solvent resistance.

In Comparative Examples 5 and 6, the average number of isocyanate groups per one molecule of the polyisocyanate compound that is one of the main components of the clear coating is not in the range of 2.5 to 3.4. Because of that, Comparative Example 5 in which the average number is less than 2.5 is inferior in solvent resistance, and Comparative Example 6 in which the average number exceeds 3.4 is inferior in water resistance.

In Comparative Example 7 and 8, the equivalence ratio of the isocyanate group in the polyisocyanate compound and the hydroxyl group in the hydroxyl group-containing resin (NCO / OH) is not in the range of 1.0 to 3.0. Because of that, Comparative Example 7 in which the equivalence ratio is less than 1.0 is inferior in water resistance, and Comparative Example 8 in which the equivalence value exceeds 3.0 is inferior in solvent resistance and appearance.

In Comparative Examples 9 and 10, the weight average molecular weight of the above-described hydroxyl group-containing resin is not in the range of 3500 to 10000. Because of that, Comparative Example 9 in which the weight average molecular weight exceeds 10000 has high viscosity, and it is found that there is a necessity of decreasing the non-volatile part in order to make the viscosity as the same level with other examples and Comparative Examples. Comparative Example 10 in which the weight average molecular weight is less than 3500 is inferior in water resistance, solvent resistance, and appearance.

Comparative Examples 11 is inferior in water resistance and appearance because the non-volatile part of the two-layer coating film made of the water-based primer coating and the water-based metallic base coating is 65%.

In Comparative Examples 12 and 13, the baking temperature when simultaneously baking and curing the three-layer coating film is not in the range of 70 to 100°C. Because of that, Comparative Example 12 in which the baking temperature is less than 70°C is inferior in initial adhesiveness, water resistance, and solvent resistance, and Comparative Example 13 in which the temperature exceeds 100°C is inferior in the appearance because deformation of the plastic material occurs.

In Comparative Examples 14 and 15, the content ratio of the solvent having a solubility parameter of 8.9 to 10.5 and the evaporation speed of 30 or less and contained in the high solid clear coating as a part of the solvent is not 7 to 15% by weight to the total amount of the clear coating. Because of that, Comparative Example 17 in which the content ratio is less than 7% by weight is inferior in water resistance and appearance, and Comparative Example 15 in which the content ratio exceeds 15% by weight is inferior in the appearance.

In Comparative Examples 16 to 18, a solvent that does not satisfy the above-described conditions is used instead of the solvent having the SP value of 8.9 to 10.5 and the V value of 30 or less in the high solid clear coating. Because of that, Comparative Example 16 in which the solvent having a SP value of less than 8.9 is used instead of the solvent according to the present invention and Comparative Example 17 in which a solvent having a V value exceeding 30 is used instead of the solvent according to the present invention are inferior in water resistance and appearance, and Comparative Example 18 in which the solvent having the SP value exceeding 10.5 is used instead of the solvent according to the present invention is inferior in water resistance, solvent resistance, and appearance.

INDUSTRIAL APPLICATION

The multi-layer film forming method for a plastic material according to the present invention can be preferably used for the formation of a multi-layer film onto the surface of a plastic material using especially the water-based metallic base coating among the base coatings for a metal material that has conventionally not been used because thermal deformation of the material is invited at high temperature and curing is insufficient at low temperature for example, and there is a possibility that various types of multi-layer films can be applied to a plastic material.

**Claims**

1.  A method of coating a plastic material for an automobile, comprising the steps of:

    forming a three-layer coating film by sequentially coating the surface of the plastic material for an automobile with a water-based primer coating, a water-based metallic base coating used for a metal material for an automobile, and a high solid clear coating, and
    baking the formed three-layer coating film simultaneously at a temperature of 70 to 100°C to be cured,
    wherein the high solid clear coating contains a hydroxyl group-containing resin and a polyisocyanate compound as main components and a solvent having a solubility parameter of 8.9 to 10.5 and an evaporation rate of 30 or less as a part of the solvent in a ratio of 7 to 15% by weight to the total amount of the high solid clear coating, the hydroxyl group-containing resin has a weight average molecular weight of 3500 to 10000 and a hydroxyl value of 80 to 180 KOHmg/g, and contains a primary and a secondary hydroxyl group in a content ratio (the primary hydroxyl group / the secondary hydroxyl group) of 10/90 to 80/20 based on the hydroxyl value, the polyisocyanate compound has an average number of isocyanate groups per molecule of 2.5 to 3.4, the equivalence ratio of the isocyanate group in the polyisocyanate compound and the hydroxyl group in the hydroxyl group-containing resin (NCO / OH) is 1.0 to 3.0, and the content of the non-volatile component in the two-layer coating film made of the water-based primer coating and the water-based metallic base coating is 75% by weight or more when coating with the high solid clear coating,

wherein the solubility parameter (SP value) is calculated by the following formula:

$$\text{SP value } \delta = (\Delta E/V)^{1/2} = (\Sigma\Delta ei/\Sigma\Delta vi)^{1/2}$$

wherein $\Delta E$ represents the cohesion energy density, V represents the molar volume, $\Delta ei$ represents the evaporation energy of an atom or an atomic group and $\Delta vi$ represents the molar volume of an atom or an atomic group at 25°C,

wherein the evaporation rate (V value) of a solvent is calculated by the following formula:

$$\text{V value} = (90\% \text{ by weight evaporation time of n-butyl acetate} / 90\% \text{ by weight evaporation time of the solvent}) \times 100$$

wherein "90% by weight evaporation time of n-butyl acetate" denotes the time in which 90% by weight of n-butyl acetate is evaporated at 25°C in nitrogen gas flow and "90% by weight evaporation time of the solvent" denotes the time in which 90% by weight of the solvent is evaporated at 25°C in nitrogen gas flow.

2. The method of coating a plastic material for an automobile according to Claim 1, wherein the acid value of the hydroxyl group-containing resin is 1 to 20 KOHmg/g.

3. The method of coating a plastic material for an automobile according to Claim 1 or 2, wherein the content of the non-volatile component in the high solid clear coating is 50 to 60% by weight when coating with the high solid clear coating.

4. A plastic material for an automobile coated through the method according to any of Claims 1 to 3.

**Patentansprüche**

1. Verfahren zur Beschichtung eines Kunststoffmaterials für ein Kraftfahrzeug, umfassend die Stufen:

Ausbilden eines dreilagigen Beschichtungsfilms durch aufeinanderfolgendes Beschichten der Oberfläche des Kunststoffmaterials für ein Kraftfahrzeug mit einer Grundierung auf Wasserbasis, einer metallischen Basisbeschichtung auf Wasserbasis, die für ein Metallmaterial für ein Kraftfahrzeug verwendet wird, und einem Klarlack mit hohem Feststoffgehalt und gleichzeitiges Brennen des gebildeten dreilagigen Beschichtungsfilms bei einer Temperatur von 70 bis 100 °C zur Härtung, wobei

der Klarlack mit hohem Feststoffgehalt ein Hydroxylgruppen enthaltendes Harz und eine Polyisocyanatverbindung als Hauptkomponenten und ein Lösemittel mit einem Löslichkeitsparameter von 8,9 bis 10,5 und einer Verdampfungsrate von 30 oder weniger als Teil des Lösemittels in einem Verhältnis von 7 bis 15 Gew.-% zur Gesamtmenge des Klarlacks mit hohem Feststoffgehalt enthält, das Hydroxylgruppen enthaltende Harz ein massegemitteltes Molekulargewicht von 3500 bis 10000 und einen Hydroxylwert von 80 bis 180 KOH mg/g aufweist und primäre und sekundäre Hydroxylgruppen in einem Gehaltsverhältnis (primäre Hydroxylgruppe/sekundäre Hydroxylgruppe) von 10/90 bis 80/20 auf der Basis des Hydroxylwerts enthält, die Polyisocyanatverbindung eine Durchschnittszahl der Isocyanatgruppen pro Molekül von 2,5 bis 3,4 aufweist,

das Äquivalenzverhältnis der Isocyanatgruppen in der Polyisocyanatverbindung und der Hydroxylgruppen in dem Hydroxylgruppen enthaltenden Harz (NCO/OH) 1,0 bis 3,0 beträgt und

der Gehalt an nichtflüchtigen Komponenten in dem zweilagigen Beschichtungsfilm, der aus der Grundierung auf Wasserbasis und der metallischen Basisbeschichtung auf Wasserbasis besteht, 75 Gew.-% oder mehr beträgt, wenn die Beschichtung mit dem Klarlack mit hohem Feststoffgehalt erfolgt,

wobei der Löslichkeitsparameter (SP-Wert) nach der folgenden Formel berechnet wird:

$$\text{SP-Wert } \delta = (\Delta E/V)^{1/2} = (\Sigma \Delta e_i / \Sigma \Delta v_i)^{1/2}$$

worin $\Delta E$ für die Kohäsionsenergiedichte steht, V für das Molvolumen steht, $\Delta e_i$ für die Verdampfungsenergie eines Atoms oder einer Atomgruppe steht und $\Delta v_i$ für das Molvolumen eines Atoms oder einer Atomgruppe bei 25 ˚C steht,

wobei die Verdampfungsrate (V-Wert) eines Lösemittels nach der folgenden Formel berechnet wird:

$$\text{V-Wert} = (90\text{-Gew.-\%-Verdampfungszeit von n-Butylacetat}/90\text{-Gew.-\%-Verdampfungszeit des Lösemittels}) \times 100$$

wobei "90-Gew.-%-Verdampfungszeit von n-Butylacetat" die Zeit angibt, in der 90 Gew.-% von n-Butylacetat bei 25 ˚C in einem Stickstoffgasstrom verdampft sind, und "90-Gew.-%-Verdampfungszeit des Lösemittels" die Zeit angibt, in der 90 Gew.-% des Lösemittels bei 25 ˚C in einem Stickstoffgasstrom verdampft sind.

2. Verfahren zur Beschichtung eines Kunststoffmaterials für ein Kraftfahrzeug nach Anspruch 1, wobei der Säurewert des Hydroxylgruppen enthaltenden Harzes 1 bis 20 KOH mg/g beträgt.

3. Verfahren zur Beschichtung eines Kunststoffmaterials für ein Kraftfahrzeug nach Anspruch 1 oder 2, wobei der Gehalt an den nichtflüchtigen Komponenten in dem Klarlack mit hohem Feststoffgehalt 50 bis 60 Gew.-% beträgt, wenn die Beschichtung mit dem Klarlack mit hohem Feststoffgehalt erfolgt.

4. Kunststoffmaterial für ein Kraftfahrzeug, das durch das Verfahren nach einem der Ansprüche 1 bis 3 beschichtet ist.

**Revendications**

1. Procédé de revêtement d'une matière plastique pour une automobile, comprenant les étapes de :

formation d'un film de revêtement à trois couches par revêtement séquentiel de la surface de matière plastique pour une automobile avec un revêtement primaire à base d'eau, un revêtement de fond métallique à base d'eau utilisé pour un matériau métallique pour une automobile, et un revêtement transparent à haut extrait sec, et cuire simultanément le film de revêtement à trois couches formé à une température de 70 à 100˚C pour qu'il se vulcanise,

dans lequel le revêtement transparent à haut extrait sec contient une résine contenant un ou des groupes hydroxyle et un composé polyisocyanate en tant que composants principaux et un solvant ayant un paramètre de solubilité de 8,9 à 10,5 et un taux d'évaporation de 30 ou moins comme partie du solvant dans un rapport de 7 à 15% en masse par rapport à la quantité totale du revêtement transparent à haut extrait sec,

la résine contenant un ou des groupes hydroxyle a une masse moléculaire moyenne en masse de 3 500 à 10 000 et un indice d'hydroxyle de 80 à 180 KOHmg/g, et contient un groupe hydroxyle primaire et un groupe hydroxyle secondaire dans un rapport de teneur (du groupe hydroxyle primaire au groupe hydroxyle secondaire) allant de 10/90 à 80/20 par rapport à l'indice d'hydroxyle, le composé polyisocyanate a un nombre moyen de groupes isocyanate par molécule de 2,5 à 3,4,

le rapport d'équivalence du groupe isocyanate dans le composé polyisocyanate et le groupe hydroxyle dans la résine contenant un ou des groupes hydroxyle (NCO/OH) est de 1,0 à 3,0, et

la teneur du composant non volatil dans le film de revêtement à deux couches du revêtement primaire à base d'eau et du revêtement de fond métallique à base d'eau est de 75% en masse ou plus lors du revêtement avec le revêtement transparent à haut extrait sec,
dans lequel le paramètre de solubilité (indice SP) est calculé par la formule suivante :

$$\text{indice SP } \delta = (\Delta E/V)^{1/2} = (\Sigma\Delta ei/\Sigma\Delta vi)^{1/2}$$

dans laquelle $\Delta E$ représente la densité d'énergie de cohésion, V représente le volume molaire, $\Delta ei$ représente l'énergie d'évaporation d'un atome ou d'un groupe atomique et $\Delta vi$ représente le volume molaire d'un atome ou d'un groupe atomique à 25°C,
dans lequel le taux d'évaporation (indice V) d'un solvant est calculé par la formule suivante :

$$\text{indice V = (temps d'évaporation à 90\% en poids d'acétate de } n\text{-butyle/temps d'évaporation à 90\% en masse du solvant) x 100}$$

dans laquelle « temps d'évaporation à 90% en poids d'acétate de n-butyle » désigne le temps au bout duquel 90% en masse d'acétate de n-butyle sont évaporés à 25°C dans un flux de diazote gazeux et « temps d'évaporation à 90% en poids du solvant » désigne le temps au bout duquel 90% en masse du solvant sont évaporés à 25°C dans un flux de diazote gazeux.

2. Procédé de revêtement d'une matière plastique pour une automobile selon la revendication 1, dans lequel l'indice d'acide de la résine contenant un ou des groupes hydroxyle est de 1 à 20 KOHmg/g.

3. Procédé de revêtement d'une matière plastique pour une automobile selon la revendication 1 ou 2, dans lequel la teneur du composant non volatil dans le revêtement transparent à haut extrait sec est de 50 à 60% en masse lors du revêtement avec le revêtement transparent à haut extrait sec.

4. Matière plastique pour une automobile revêtue par le procédé selon l'une quelconque des revendications 1 à 3.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10296171 A
- JP 61161179 A
- US 20020090461 A
- GB 2171030 A

**Non-patent literature cited in the description**

- **YUJI HARAZAKI.** Basic Science of Coating. Maki Bookstore, 10 June 1988, 54-57